# DEMANDE DE BREVET EUROPEEN

(11) **EP 4 759 200 A1**
(43) Date de publication de la demande: **17.06.2026**
(21) Numéro de dépôt: 25222103.1
(22) Date de dépôt: 10.12.2025
(51) Int. Cl.: A47J 19/02, A47J 43/046, A23N 1/00

(54) **APPAREIL DE PRÉPARATION CULINAIRE**

(30) Priorité: 11.12.2024 FR 2413892
(71) Demandeur: SANTOS, 69120 Vaulx-en-Velin (FR)
(72) Inventeur: FOUQUET, Nicolas, 69120 VAULX EN VELIN (FR); GELIN, Cédric, 69008 LYON (FR)
(74) Mandataire: Lavoix

(57) **Abrégé**

L'invention concerne un appareil de préparation culinaire (10) comprenant un socle (12), un outil, un couvercle (20) et un système de verrouillage du couvercle comportant un dispositif d'actionnement, un levier (34), entraîné en rotation par rapport au socle par le dispositif d'actionnement, et un crochet (36), mis en mouvement par le levier. Le crochet comporte une extrémité basse (36A), attachée au premier levier, une extrémité haute (36B) et une portion centrale allongée (36C) s'étendant au travers d'une ouverture du socle. L'ouverture du socle guide la portion centrale, de sorte que le premier crochet est apte à coulisser par rapport au socle le long de sa portion centrale et, conjointement, pivoter par rapport au socle. L'appareil est ainsi opérable, par une rotation du levier, entre une configuration verrouillée, dans laquelle l'extrémité haute du crochet empêche un retrait du couvercle, et une configuration déverrouillée dans laquelle le couvercle peut être retiré.

## Description

La présente invention concerne un appareil de préparation culinaire, notamment une centrifugeuse.

Un appareil de préparation culinaire assure la préparation d'aliments qui y sont admis, notamment par pressage, découpage, râpage ou tranchage. Il trouve son application à tous types d'aliments, que ce soit des fruits ou légumes, des poissons ou encore de la viande. Un tel appareil de préparation culinaire est couramment utilisé dans les professions de l'hôtellerie, ou encore de la restauration collective, et également en usage privé. À titre d'exemples non limitatifs, il peut s'agir d'une centrifugeuse pour fruits et légumes, d'un mixeur, d'un presse-agrumes, d'une râpe à fromage, d'un coupe-légumes ou encore d'un robot multifonction.

Dans le cas d'une centrifugeuse, celle-ci comporte un socle fixe, sur lequel est rapporté, de façon amovible, un outil rotatif, généralement un panier rotatif, qui est entraîné par un moteur électrique. Cet outil rotatif comprend un fond, formant râpe, ainsi que des parois latérales s'étendant à partir de ce fond, qui constituent un tamis.

Il est par ailleurs prévu un couvercle amovible, dans lequel est ménagée un orifice d'introduction permettant l'introduction des aliments, en particulier des fruits et légumes. Le couvercle recouvre le panier rotatif et notamment la râpe, protégeant ainsi l'utilisateur de tout contact avec la râpe. En service, les aliments sont maintenus au contact de la râpe tournant à grande vitesse, moyennant l'action d'un poussoir manipulé par l'utilisateur et passant par l'orifice d'introduction.

Dans ces conditions, les aliments sont déchiquetés au voisinage de la râpe. Le tamis laisse alors s'écouler le jus, tout en retenant les parties solides des aliments. Ces aliments sont alors évacués, sous l'effet de la force centrifuge, vers la partie supérieure du panier, puis récupérée dans un réservoir, ou une poubelle. Par ailleurs, le jus liquide ayant traversé les parois du tamis, se trouve collecté dans une cuve à jus.

Un tel appareil de préparation culinaire comporte un système de verrouillage, pour assurer un freinage et un arrêt fiable de l'outil rotatif lorsque l'utilisateur cherche à retirer le couvercle amovible. Ainsi, l'accès à l'outil rotatif lorsque ce dernier est en rotation est empêché, assurant ainsi la sécurité de l'utilisateur.

On connaît FR-A-2 830 423, qui décrit un appareil de préparation culinaire de ce type, dans lequel le système de verrouillage comporte une poignée de serrage, qui se verrouille dans un renfoncement du couvercle amovible et qui est montée sur deux tringles de serrage. Le déverrouillage du couvercle amovible s'effectue par l'utilisateur, en deux mouvements consécutifs, tout d'abord en pivotant la poignée vers le haut, puis en faisant basculer la poignée et les tringles vers l'avant de l'appareil. Dès que la poignée est pivotée vers le haut, un système de freinage est mis en fonctionnement, assurant un freinage mécanique de l'outil rotatif, et l'alimentation électrique du moteur électrique est interrompue.

Ce système de verrouillage donne globalement satisfaction, son utilisation étant fiable et sûre. Toutefois, l'ergonomie de ce système de verrouillage est améliorable, car sa manœuvre requiert deux mouvements successifs et la poignée occupe un espace important à l'avant de l'appareil lorsque le couvercle amovible est déverrouillé, gênant l'accès au couvercle amovible et à la cuve à jus et encombrant l'espace situé à l'avant de l'appareil.

Le but de l'invention est alors de proposer un appareil de préparation culinaire dont l'ergonomie est améliorée.

À cet effet, l'invention a pour objet un appareil de préparation culinaire, notamment une centrifugeuse, comprenant au moins :
- un socle,
- un outil, monté sur le socle,
- un couvercle amovible, destiné à être monté sur le reste de l'appareil pour recouvrir l'outil,
- un moteur électrique, monté sur le socle, mobile en rotation autour d'un axe principal et configuré pour actionner l'outil, et
- un système de verrouillage du couvercle amovible sur le socle.

Selon l'invention, le système de verrouillage comprend :
- un dispositif d'actionnement,
- un premier levier, disposé dans le socle, mobile en rotation par rapport au socle autour d'un premier axe de levier, le premier levier étant configuré pour être entraîné en rotation autour du premier axe de levier par le dispositif d'actionnement,
- un premier crochet, configuré pour être mis en mouvement par le premier levier, et comportant :
   ∘ une extrémité basse, attachée au premier levier de sorte à être mobile en rotation par rapport au premier levier autour d'un deuxième axe de levier parallèle au premier axe de levier,
   ∘ une extrémité haute, et
   ∘ une portion centrale allongée, reliant l'extrémité basse à l'extrémité haute.

En outre, la portion centrale du premier crochet s'étend au travers d'une première ouverture du socle, en étant guidée par la première ouverture du socle, de sorte que le premier crochet est apte à :
- coulisser, par rapport au socle, le long de sa portion centrale, entre une position de verrouillage et une position de déverrouillage, et conjointement
- pivoter, par rapport au socle, autour d'un premier axe de pivotement parallèle au premier axe de levier et passant par la première ouverture du socle, entre une orientation de verrouillage et une orientation de déverrouillage.

Ainsi, l'appareil est opérable, par le dispositif d'actionnement entraînant en rotation le premier levier autour du premier axe de levier, entre :
- une configuration verrouillée, dans laquelle le premier crochet est dans sa position de verrouillage et dans son orientation de verrouillage et dans laquelle l'extrémité haute du premier crochet est en contact avec le couvercle amovible, empêchant un retrait du couvercle amovible, et
- une configuration déverrouillée, dans laquelle le premier crochet est dans sa position de déverrouillage et dans son orientation de déverrouillage et dans laquelle l'extrémité haute du premier crochet est écartée du couvercle amovible, autorisant un retrait du couvercle amovible.

Grâce à l'invention, l'ergonomie de l'appareil de préparation culinaire est améliorée. En particulier, un seul mouvement de rotation du premier levier, provoqué en agissant sur le dispositif d'actionnement, est suffisant pour déverrouiller l'appareil de préparation culinaire et permettre le retrait du couvercle amovible.

En particulier, le premier crochet est guidé d'une part par son extrémité basse, attachée au premier levier, et d'autre part par la première ouverture du socle, qui autorise un coulissement et un pivotement simultané du premier crochet au travers de l'ouverture. Par conséquent, la rotation du premier levier entraîne un mouvement elliptique de l'extrémité haute du premier crochet, ce qui permet d'engager ou de dégager l'extrémité haute du premier crochet avec le couvercle amovible de manière efficace et fiable. Ce mouvement elliptique est particulièrement avantageux, car il permet simultanément d'éloigner l'extrémité haute du premier crochet du couvercle amovible, selon l'axe principal, déverrouillant ainsi l'appareil de préparation culinaire, et d'écarter l'extrémité haute du premier crochet du couvercle amovible, perpendiculairement à l'axe principal, permettant ainsi un retrait du couvercle amovible selon l'axe vertical, sans augmenter l'encombrement de l'appareil ni nécessiter d'espace libre à l'avant de l'appareil.

Autrement dit, déverrouiller l'appareil ne nécessite qu'un seul mouvement agissant sur le dispositif d'actionnement et, une fois l'appareil déverrouillé, le couvercle amovible est apte à être retiré d'un simple mouvement de translation. De plus, le premier crochet ne gêne pas le démontage du couvercle amovible et de la cuve à jus vers l'avant de l'appareil. En outre, le mouvement elliptique de l'extrémité haute du premier crochet donne une indication visuelle aisément perceptible de l'état verrouillé ou déverrouillé de l'appareil, tout en étant esthétiquement plaisant. L'appareil est ainsi facilement utilisable à une seule main.

Suivant d'autres aspects avantageux de l'invention, l'appareil de préparation culinaire comprend une ou plusieurs des caractéristiques suivantes, prises isolément ou suivant toutes les combinaisons techniquement possibles :
- Le dispositif d'actionnement comprend une tringle, mobile en rotation par rapport au socle autour d'un axe de tringle, entre une orientation de verrouillage et une orientation de déverrouillage, et une première bielle. La première bielle comporte une première extrémité, attachée à la tringle de sorte à être mobile en rotation par rapport à la tringle autour d'un premier axe de bielle parallèle à l'axe de tringle, et une deuxième extrémité, attachée au premier levier de sorte à être mobile en rotation par rapport au premier levier autour d'un deuxième axe de bielle parallèle au premier axe de levier et d'un troisième axe de bielle parallèle au premier axe de bielle. Le dispositif d'actionnement est configuré pour qu'une rotation de la tringle autour de l'axe de tringle entre ses orientations de verrouillage et de déverrouillage entraîne en rotation le premier levier autour du premier axe de levier par l'intermédiaire de la première bielle et opère ainsi l'appareil entre ses configurations verrouillée et déverrouillée respectivement, l'appareil étant en configuration verrouillée lorsque la tringle est en orientation de verrouillage et l'appareil étant en configuration déverrouillée lorsque la tringle est en orientation de déverrouillage.
- Le dispositif d'actionnement comprend une poignée, attachée à la tringle et mobile en rotation par rapport au socle autour de l'axe de tringle, la poignée étant configurée pour entraîner en rotation la tringle autour de l'axe de tringle entre ses orientations de verrouillage et de déverrouillage.
- L'axe de tringle, le premier axe de bielle et le troisième axe de bielle sont orthogonaux à un axe de hauteur. En configuration verrouillée de l'appareil, la tringle est située entre la première extrémité de la première bielle et la deuxième extrémité de la première bielle, selon l'axe de hauteur, et en configuration déverrouillée de l'appareil, la première extrémité de la première bielle est située entre la tringle et la deuxième extrémité de la première bielle, selon l'axe de hauteur. La première extrémité de la première bielle étant déplacée vers le bas et la tringle étant déplacée vers le haut, selon l'axe de hauteur, lorsque l'appareil est opéré depuis sa configuration déverrouillée vers sa configuration verrouillée, et la première extrémité de la première bielle étant déplacée vers le haut et la tringle étant déplacée vers le bas, selon l'axe de hauteur, lorsque l'appareil est opéré depuis sa configuration verrouillée vers sa configuration déverrouillée.
- En configuration verrouillée de l'appareil, le premier axe de bielle est situé d'un premier côté d'un plan passant par l'axe de tringle et par le troisième axe de bielle, en configuration déverrouillée de l'appareil, le premier axe de bielle est situé d'un deuxième côté du plan passant par l'axe de tringle et par le troisième axe de bielle, le deuxième côté étant opposé au premier côté, et l'appareil passe par une configuration d'alignement lorsque l'appareil est opéré entre sa configuration déverrouillée et sa configuration verrouillée, dans laquelle le premier axe de bielle passe par le plan passant par l'axe de tringle et par le troisième axe de bielle.
- La tringle est mobile en translation par rapport au socle le long de l'axe principal, entre une position de libération et une position de freinage et la position de libération de la tringle est atteinte lorsque le couvercle amovible est monté sur le reste de l'appareil et lorsque la tringle est dans son orientation de verrouillage. L'appareil comprend, en outre, un système de freinage, apte à freiner une rotation du moteur électrique autour de l'axe principal, le système de freinage comprenant un dispositif de freinage, solidaire en rotation avec le moteur électrique, et un organe de freinage, attaché à la tringle de sorte à être mobile en rotation par rapport à la tringle autour de l'axe de tringle et fixe en translation par rapport à la tringle selon l'axe principal. Une translation de la tringle entre sa position de libération et sa position de freinage opère l'organe de freinage entre une position de libération, atteinte lorsque la tringle est en position de libération et dans laquelle l'organe de freinage ne coopère pas avec le dispositif de freinage de sorte que le système de freinage ne s'oppose pas à une rotation du moteur électrique autour de l'axe principal, et une position de freinage, atteinte lorsque la tringle est en position de freinage et dans laquelle l'organe de freinage coopère avec le dispositif de freinage de sorte que le système de freinage s'oppose à une rotation du moteur électrique autour de l'axe principal.
- Le système de freinage comporte, en outre, un organe de rappel, exerçant un effort sur l'organe de freinage et sur la tringle selon l'axe principal tendant à ramener la tringle dans sa position de freinage. Lorsque le couvercle amovible est monté sur le reste de l'appareil, une rotation de la tringle depuis son orientation de déverrouillage vers son orientation de verrouillage entraîne une translation de la tringle depuis sa position de freinage vers sa position de libération, à l'encontre de l'effort exercé par l'organe de rappel sur l'organe de freinage et sur la tringle, et, lorsque le couvercle amovible n'est pas monté sur le reste de l'appareil, une rotation de la tringle depuis son orientation de déverrouillage vers son orientation de verrouillage n'entraîne pas de translation de la tringle depuis sa position de freinage vers sa position de libération et entraîne un coulissement du premier crochet au-delà de sa position de verrouillage, sous l'effet de l'effort exercé par l'organe de rappel sur l'organe de freinage et sur la tringle.
- Le dispositif de freinage est un disque de freinage, solidaire en rotation avec le moteur électrique, l'organe de freinage est une tôle de freinage, s'étendant parallèlement au disque de freinage, et, en position de freinage, la tôle de freinage est en appui contre le disque de freinage pour s'opposer à une rotation du moteur électrique autour de l'axe principal.
- Le socle comporte un trou oblong, s'étendant selon l'axe principal, et la tringle s'étend au travers du trou oblong du socle de sorte que le socle n'empêche pas la translation de la tringle le long de l'axe principal.
- L'appareil comporte un dispositif de guidage, qui guide en translation l'organe de freinage et la tringle par rapport au socle selon l'axe principal.
- Un rapport entre une première distance, mesurée entre le premier axe de levier et le premier axe de pivotement, et une longueur du premier levier, mesurée entre le premier axe de levier et le deuxième axe de levier, est compris entre 1,5 et 4,5, de préférence égal à 2,6.
- Un débattement angulaire du premier crochet autour du premier axe de pivotement, entre son orientation de verrouillage et son orientation de déverrouillage, est supérieur ou égal à 5°, de préférence supérieur ou égal à 10°.
- Un angle entre la portion centrale du premier crochet et un axe de hauteur, mesuré dans un plan perpendiculaire au premier axe de pivotement dans l'orientation de déverrouillage du premier crochet, est supérieur ou égal à 5°, de préférence supérieur ou égal à 15°.
- Un débattement linéaire du premier crochet le long de sa partie centrale, entre sa position de verrouillage et sa position de déverrouillage, est supérieur ou égal à 10 mm, de préférence supérieur ou égal à 15 mm.
- L'appareil comprend, en outre, un dispositif de coupure, opérable entre une configuration d'alimentation, dans laquelle le moteur électrique est électriquement alimenté de sorte à être apte à actionner l'outil, et une configuration de coupure, dans laquelle le moteur électrique n'est pas électriquement alimenté de sorte à ne pas être apte à actionner l'outil. Le dispositif de coupure est en configuration d'alimentation lorsque l'appareil est en configuration verrouillée, le dispositif de coupure est en configuration de coupure lorsque l'appareil est en configuration déverrouillée et l'appareil est également opérable, par le dispositif d'actionnement entraînant en rotation le premier levier autour du premier axe de levier, en une configuration intermédiaire, atteinte entre la configuration verrouillée et la configuration déverrouillée, dans laquelle l'extrémité haute du premier crochet est en contact avec le couvercle amovible, empêchant un retrait du couvercle amovible et dans laquelle le dispositif de coupure est en configuration de coupure.
- Le système de verrouillage comprend, en outre un deuxième levier, disposé dans le socle, mobile en rotation par rapport au socle autour d'un troisième axe de levier, le deuxième levier étant configuré pour être entraînée en rotation autour du troisième axe de levier par le dispositif d'actionnement, un deuxième crochet, configuré pour être mis en mouvement par le deuxième levier, et comportant une extrémité basse, attachée au deuxième levier et mobile en rotation par rapport au deuxième levier autour d'un quatrième axe de levier parallèle au troisième axe de levier, une extrémité haute, et une portion centrale allongée, reliant l'extrémité basse à l'extrémité haute. La portion centrale du deuxième crochet s'étend au travers d'une deuxième ouverture du socle en étant guidée par la deuxième ouverture du socle, de sorte que le deuxième crochet est apte à coulisser, par rapport au socle, le long de sa portion centrale, entre une position de verrouillage et une position de déverrouillage du deuxième crochet par rapport au socle, et conjointement pivoter, par rapport au socle, autour d'un deuxième axe de pivotement parallèle au quatrième axe de levier et passant par la deuxième ouverture du socle, entre une orientation de verrouillage et une orientation de déverrouillage. L'appareil est opéré entre sa configuration verrouillée et sa configuration déverrouillée par le dispositif d'actionnement entraînant en rotation, outre le premier levier autour du premier axe de levier, le deuxième levier autour du troisième axe de levier. En configuration verrouillée de l'appareil, le deuxième crochet est dans sa position de verrouillage et dans son orientation de verrouillage et l'extrémité haute du deuxième crochet est en contact avec le couvercle amovible, empêchant un retrait du couvercle amovible, et, en configuration déverrouillée de l'appareil, le deuxième crochet est dans sa position de déverrouillage et dans son orientation de déverrouillage et l'extrémité haute du deuxième crochet est écartée du couvercle amovible, autorisant un retrait du couvercle amovible.

L'invention apparaîtra plus clairement à la lecture de la description qui va suivre, donnée uniquement à titre d'exemple non limitatif, et faite en référence aux dessins dans lesquels :
[Fig. 1] La figure 1 est une vue en perspective éclatée d'un appareil de préparation culinaire selon un premier mode de réalisation de l'invention, dans laquelle un socle de l'appareil, d'une part, et un couvercle amovible de l'appareil, d'autre part, sont représentés éloignés du reste de l'appareil.
[Fig. 2] La figure 2 est une vue en perspective de l'appareil de la figure 1, dans laquelle le socle est représenté en transparence.
[Fig. 3] La figure 3 est une vue de face de l'appareil des figures 1 et 2, le socle étant représenté en transparence, l'appareil étant dans une configuration déverrouillée.
[Fig. 4] La figure 4 est une vue de face de l'appareil des figures 1 à 3, le socle étant représenté en transparence, l'appareil étant dans une configuration intermédiaire.
[Fig. 5] La figure 5 est une vue de face de l'appareil des figures 1 à 4, le socle étant représenté en transparence, l'appareil étant dans une configuration verrouillée.
[Fig. 6] La figure 6 est une vue de côté de l'appareil des figures 1 à 5, le socle étant représenté en transparence, l'appareil étant dans sa configuration déverrouillée.
[Fig. 7] La figure 7 est une vue de côté de l'appareil des figures 1 à 6, le socle étant représenté en transparence, l'appareil étant dans sa configuration intermédiaire.
[Fig. 8] La figure 8 est une vue de côté de l'appareil des figures 1 à 7, le socle étant représenté en transparence, l'appareil étant dans sa configuration verrouillée.
[Fig. 9] La figure 9 est une vue en perspective d'un appareil de préparation culinaire selon un deuxième mode de réalisation de l'invention, qui comprend un socle dont une partie seulement est représentée, l'appareil étant dans une configuration déverrouillée.
[Fig. 10] La figure 10 est une vue en perspective analogue à celle de la figure 9, l'appareil étant dans une configuration verrouillée.
[Fig. 11] La figure 11 est une représentation schématique d'une partie de l'appareil des figures 9 et 10, illustrant les positions d'un premier levier et d'un premier crochet de l'appareil dans les configurations déverrouillée et verrouillée de l'appareil.

Dans la suite de la description, deux axes sont orthogonaux s'ils sont chacun parallèles à des axes se coupant à angle droit. Dans l'espace, deux axes orthogonaux peuvent être sécants ou non-sécants. Deux axes perpendiculaires sont orthogonaux et sécants.

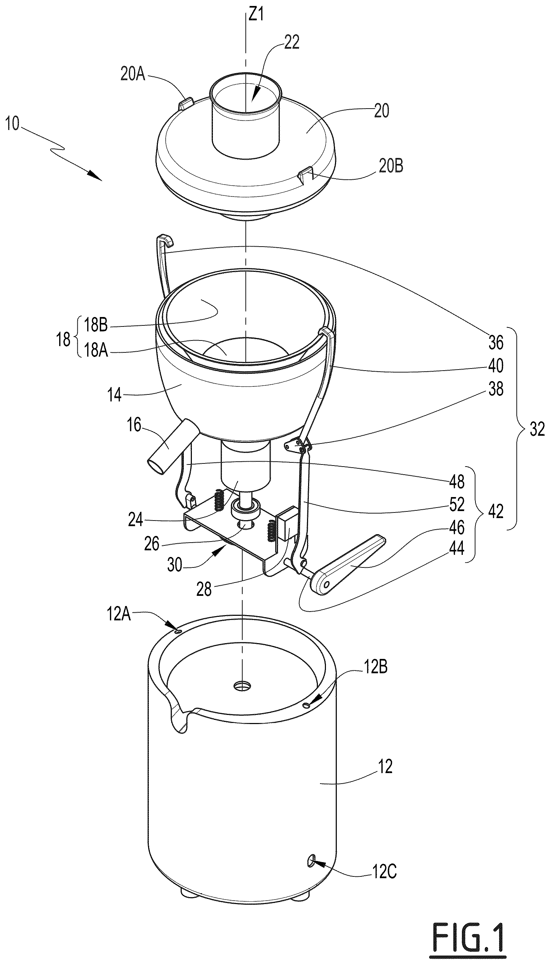

Un appareil de préparation culinaire 10 conforme à un premier mode de réalisation de l'invention est représenté schématiquement aux figures 1 à 8. Dans l'exemple, l'appareil 10 est une centrifugeuse.

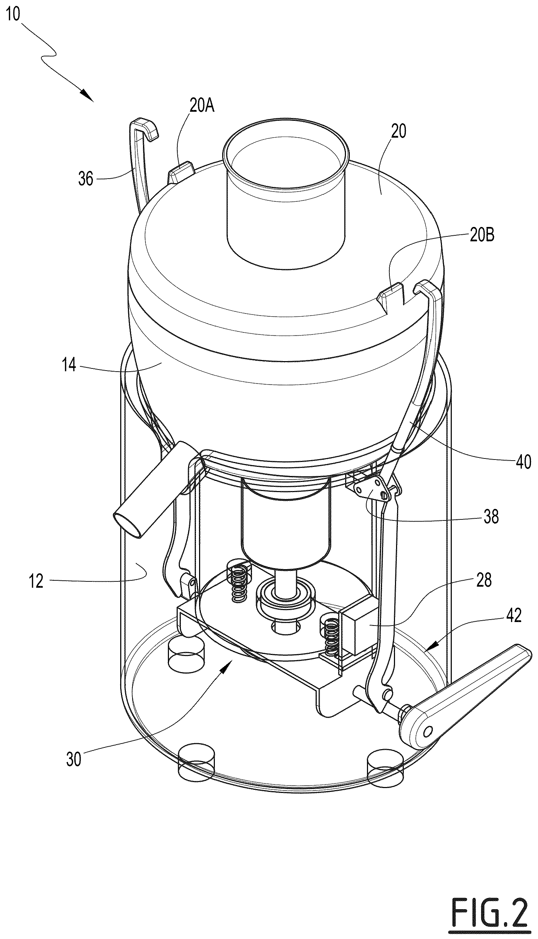

Comme particulièrement visible aux figures 1 et 2, l'appareil 10 comporte un socle 12, une cuve à jus 14 montée sur le socle 12 et pourvue d'un bec verseur 16, un outil 18, un couvercle amovible 20 dans lequel est ménagée un orifice 22 d'introduction d'aliments et un réservoir, ou une poubelle, non-représenté et généralement disposé à l'opposé du bec verseur 16. L'outil 18 est monté sur le socle 12. Plus précisément, l'outil rotatif 18 est monté sur la cuve à jus 14, qui est elle-même montée sur le socle 12. Dans l'exemple, l'outil 18 est un outil rotatif qui est mobile en rotation autour d'un axe principal Z1 par rapport au socle 12, qui est également un axe de hauteur, cet axe de hauteur étant préférentiellement vertical en configuration d'utilisation normale de l'appareil 10. Ici, l'outil rotatif 18 comporte un fond 18A formant râpe ainsi que des parois latérales 18B s'étendant à partir de ce fond, qui constituent un tamis. Le couvercle 20 est destiné à être monté sur le reste de l'appareil 10 pour recouvrir l'outil rotatif 18. En pratique, le couvercle 20 est monté sur la cuve à jus 14. Autrement dit, le couvercle 20 est monté sur le socle 12 par l'intermédiaire de la cuve à jus.

Lorsqu'un aliment est introduit dans l'appareil par l'orifice 22 du couvercle 20 et que l'outil rotatif 18 est en rotation, le contact de l'aliment contre la râpe 18A sépare le jus de l'aliment de ses parties solides, telles que de la pulpe, le jus traversant le tamis 18B pour s'écouler dans la cuve à jus 14 et les parties solides étant guidées par le tamis 18B jusqu'au réservoir sous l'effet de la force centrifuge.

Pour actionner l'outil 18, l'appareil 10 comporte un moteur électrique 24, monté sur le socle 12. Ici, le moteur électrique 24 actionne l'outil 18 en l'entraînant en rotation. Pour cela, le moteur électrique 24 comprend un arbre moteur 26 s'étendant selon l'axe principal Z1. L'arbre moteur 26 est attaché à l'outil rotatif 18, de sorte que l'arbre moteur est apte à entraîner l'outil rotatif en rotation autour de l'axe principal Z1. En pratique, le moteur électrique 24 et son arbre moteur 26 sont disposés à l'intérieur du socle 12, de sorte à ne pas être visibles depuis l'extérieur de l'appareil 10, et l'arbre moteur 26 s'étend au travers de la cuve à jus 14 de sorte à pouvoir être attaché à l'outil rotatif 18. De préférence, le moteur électrique 24 est alimenté par l'intermédiaire d'un câble d'alimentation, non-représenté.

L'appareil 10 comporte un dispositif de coupure 28, qui est opérable entre une configuration d'alimentation, dans laquelle le moteur électrique 24 est électriquement alimenté de sorte à être apte à entraîner l'outil rotatif 18, et une configuration de coupure, dans laquelle le moteur électrique 24 n'est pas électriquement alimenté de sorte à ne pas être apte à entraîner l'outil rotatif 18. Autrement dit, le dispositif de coupure 28 permet d'autoriser ou d'interdire le fonctionnement du moteur électrique 24. Notamment, le dispositif de coupure 28 permet d'empêcher le démarrage du moteur électrique 24 lorsque son fonctionnement représenterait un danger pour un utilisateur, par exemple lorsque le couvercle 20 ne recouvre pas l'outil rotatif 18, comme expliqué ci-après. Ainsi, le dispositif de coupure 28 a une fonction de mise en sécurité de l'appareil 10.

Dans l'exemple, le dispositif de coupure 28 est un contact électrique comportant un corps 28A et un palpeur 28B apte à coulisser par rapport au corps 28A, la bascule entre les configurations d'alimentation et de coupure du dispositif de coupure s'effectuant en fonction de la position du palpeur par rapport au corps.

L'appareil 10 comporte un système de freinage 30, apte à freiner une rotation de l'arbre moteur 26 autour de l'axe principal Z1, qui est ici également un axe de hauteur. En pratique, le système de freinage 30 comporte un dispositif de freinage 30A, qui est solidaire de l'arbre moteur 26, et un organe de freinage 30B, qui est mobile en translation par rapport au socle 12 et ainsi par rapport au dispositif de freinage 30A, selon l'axe principal Z1.

L'organe de freinage 30B est mobile en translation selon l'axe principal Z1 entre une position de libération, dans laquelle l'organe de freinage 30B ne coopère pas avec le dispositif de freinage 30A, de sorte que le système de freinage 30 ne s'oppose pas à une rotation de l'arbre moteur 26 autour de l'axe principal Z1, et une position de freinage, dans laquelle l'organe de freinage 30B coopère avec le dispositif de freinage 30A de sorte que le système de freinage 30 s'oppose à une rotation de l'arbre moteur 26 autour de l'axe principal Z1. Autrement dit, lorsque le moteur électrique 24 est en fonctionnement et que l'organe de freinage 30B est déplacé en position de freinage, alors le système de freinage 30 vient freiner, puis arrêter, la rotation de l'arbre moteur 26.

Avantageusement, l'organe de freinage 30B est guidé en translation selon l'axe principal Z1, par rapport au socle 12, par un dispositif de guidage non-représenté. De préférence, le dispositif de guidage s'oppose, en outre, à une rotation de l'organe de freinage 30B autour de l'axe principal Z1. Le dispositif de guidage permet ainsi de faciliter la translation de l'organe de freinage 30B et d'empêcher d'autres mouvements de l'organe de freinage 30B. En outre, en guidant l'organe de freinage 30B, le dispositif de guidage permet également de guider la tringle 44 dans son mouvement de translation selon l'axe principal Z1.

Dans l'exemple, le dispositif de freinage 30A est un disque de freinage, solidaire en rotation avec l'arbre moteur 26, et l'organe de freinage 30B est une tôle de freinage, de préférence métallique, qui vient en appui contre le disque de freinage 30A lorsque la tôle de freinage 30B est en position de freinage. Le disque de freinage 30A et la tôle de freinage 30B s'étendent parallèlement l'un à l'autre, de préférence perpendiculairement à l'axe principal Z1. Avantageusement, le disque de freinage 30A est équipé d'une garniture de freinage 30C, qui s'étend depuis le disque de freinage 30A en direction de la tôle de freinage 30B, assurant un meilleur freinage entre le disque de freinage et la tôle de freinage.

Avantageusement, le système de freinage 30 comporte un organe de rappel 30D, qui exerce un effort sur l'organe de freinage 30B selon l'axe principal Z1 tendant à rapprocher l'organe de freinage du dispositif de freinage 30A. Autrement dit, l'organe de rappel 30D tend à ramener l'organe de freinage 30B en position de freinage. Dans l'exemple, l'organe de rappel 30D comprend deux ressorts de compression s'étendant selon l'axe principal Z1 entre l'organe de freinage 30B et le socle 12.

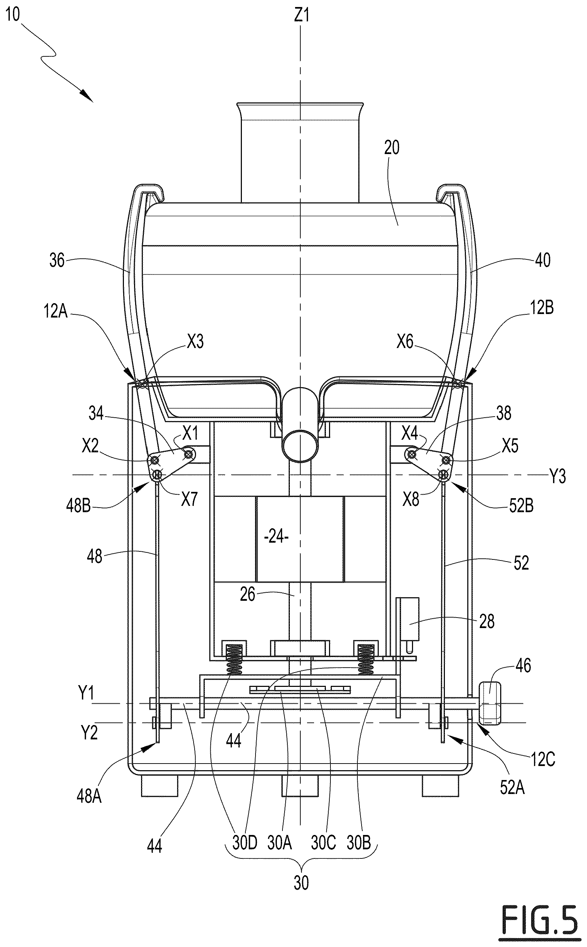

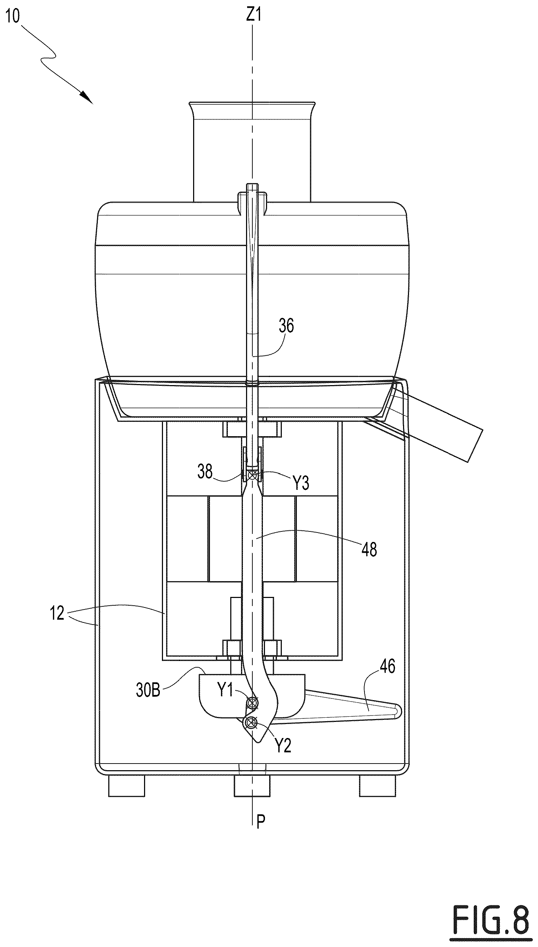

L'appareil 10 est opérable entre une configuration verrouillée, illustrée sur les figures 5 et 8, et une configuration déverrouillée, illustrée sur les figures 2, 3 et 6.

En configuration verrouillée, le couvercle 20 est maintenu sur le reste de l'appareil 10, autrement dit le retrait du couvercle est empêché, de sorte que l'appareil est apte à être mis en fonctionnement en toute sécurité, sans risque qu'un utilisateur ne puisse accéder à l'outil rotatif 18 pendant que l'outil rotatif est en rotation autour de l'axe principal Z1. En outre, en configuration verrouillée, l'organe de freinage 30B est en position de libération de sorte que le système de freinage 30 ne freine pas une rotation de l'arbre moteur 26 autour de l'axe principal Z1 et le dispositif de coupure 28 est en configuration d'alimentation, de sorte que le moteur électrique 24 est électriquement alimenté.

En configuration déverrouillée, le couvercle 20 est apte à être retiré du reste de l'appareil 10, de sorte que l'accès à l'outil rotatif 18 est possible. En outre, en configuration verrouillée, l'organe de freinage 30B est en position de freinage de sorte que le système de freinage 30 freine une rotation de l'arbre moteur 26 autour de l'axe principal Z1 et empêche une mise en rotation de l'arbre moteur et le dispositif de coupure 28 est en configuration de coupure, de sorte que le moteur électrique 24 n'est pas électriquement alimenté. Grâce au dispositif de coupure 28 et au système de freinage 30, l'appareil 10 est mis en sécurité par deux moyens distincts lorsqu'il est déverrouillé.

L'appareil 10 comporte un système de verrouillage 32 prévu pour permettre de maintenir le couvercle amovible 20 sur le reste de l'appareil 10 de manière sécurisée lorsque l'appareil est en configuration verrouillée, sans empêcher le retrait du couvercle lorsque l'appareil est en configuration déverrouillée. Le système de verrouillage 32 comporte un premier levier 34 et un premier crochet 36.

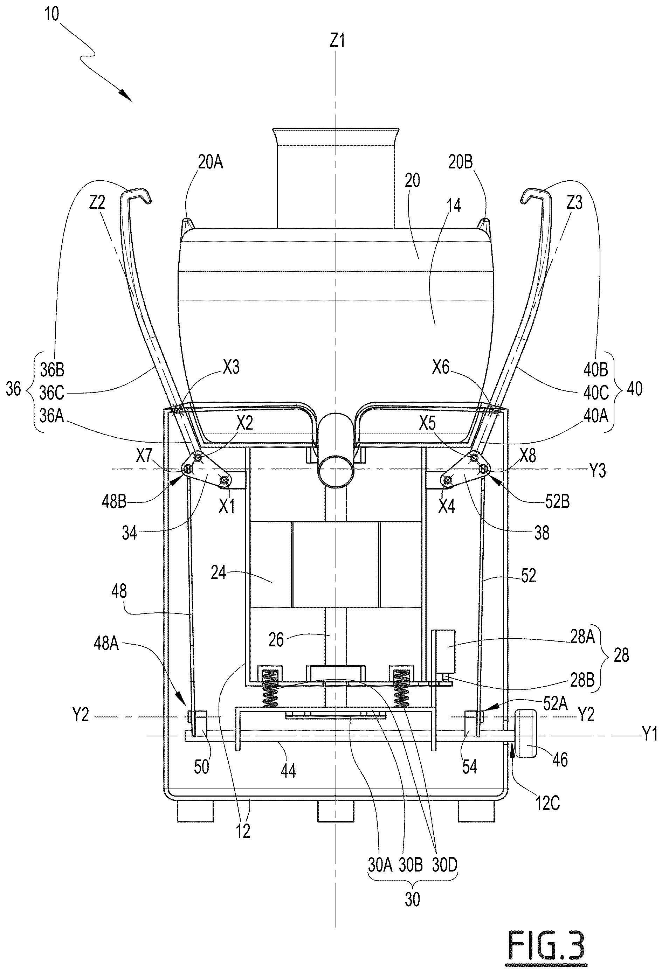

Le fonctionnement du système de verrouillage 32 est particulièrement visible sur les figures 3, 4 et 5.

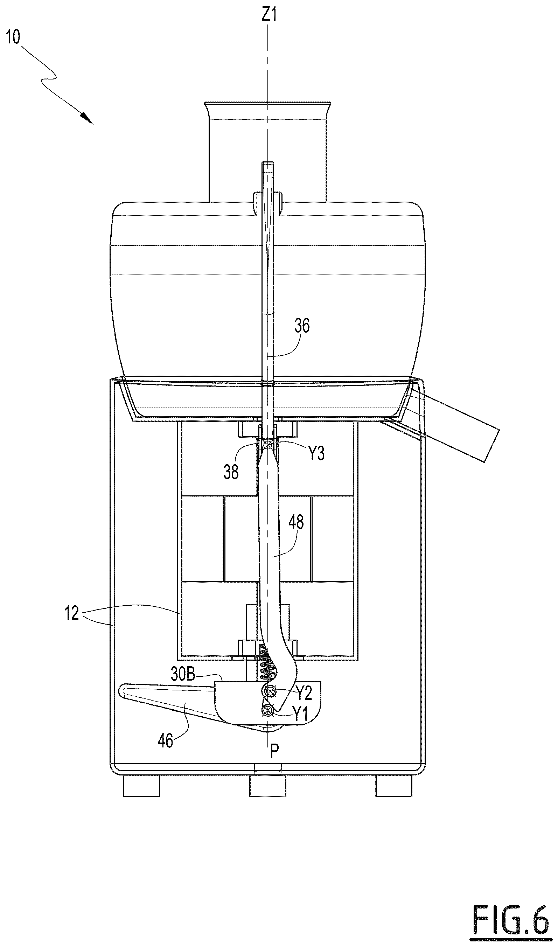

Le premier levier 34 est disposé dans le socle 12 et mobile en rotation par rapport au socle autour d'un premier axe de levier X1 qui est non-parallèle à l'axe principal Z1, entre une orientation de verrouillage et une orientation de déverrouillage. Autrement dit, le premier levier 34 est monté pivotant par rapport au socle 12 autour du premier axe de levier X1. Ici, le premier axe de levier X1 est orthogonal à l'axe principal Z1. En outre, le premier axe de levier X1 est fixe par rapport au socle 12. Par « dans le socle », on comprend que le premier levier 34 est situé à l'intérieur du socle 12, c'est-à-dire dans un volume interne de l'appareil 10 délimité par le socle 12, comme bien visible sur les figures 6 à 8. Ainsi, le premier levier 34 ne peut pas être directement manipulé par un utilisateur de l'appareil 10 depuis l'extérieur du socle 12.

Le premier crochet 36 comporte une extrémité basse 36A, une extrémité haute 36B et une portion centrale 36C allongée et reliant l'extrémité basse 36A à l'extrémité haute 36B.

L'extrémité basse 36A est attachée au premier levier 34 de sorte à être mobile en rotation par rapport au premier levier 34 autour d'un deuxième axe de levier X2 parallèle au premier axe de levier X1. Autrement dit, le premier crochet 36 est apte à pivoter par rapport au premier levier 34, autour du deuxième axe de levier X2. L'extrémité basse 36A est avantageusement disposée à l'intérieur du socle 12. Ainsi, le premier crochet 36 est mis en mouvement par le premier levier 34. Plus précisément, l'extrémité basse 36A étant attachée au premier levier au niveau du deuxième axe de levier X2, elle est déplacée par le premier levier 34 dans un mouvement de rotation autour du premier axe de levier X1 : lorsque le premier levier est déplacé entre ses orientations de verrouillage et de déverrouillage, l'extrémité basse 36A suit un arc de cercle autour du premier axe de levier X1. On note que le deuxième axe de levier X2 est mobile par rapport au socle 12.

Dans l'exemple, le premier levier 34 est formé par deux plaques identiques et parallèles entre elles, reliées par deux arbres s'étendant respectivement selon le premier axe de levier X1 et selon le deuxième axe de levier X2. D'autres conceptions sont envisageables pour le premier levier, comme par exemple une conception monobloc.

L'extrémité haute 36B est prévue pour coopérer avec le couvercle 20 afin de retenir le couvercle monté sur le reste de l'appareil 10 lorsque l'appareil est et configuration verrouillée. Plus précisément, l'extrémité haute 36B est prévue pour coopérer mécaniquement avec le couvercle 20, notamment par complémentarité de formes, afin de retenir le couvercle monté sur le reste de l'appareil 10.

Dans l'exemple, à cet effet, l'extrémité haute 36B présente une forme de crochet qui coopère avec un premier ergot 20A du couvercle 20 lorsque l'appareil 10 est en configuration verrouillée. L'extrémité haute 36B est disposée à l'extérieur du socle 12.

La portion centrale 36C relie l'extrémité basse 36A à l'extrémité haute 36B et s'étend au travers d'une première ouverture 12A du socle 12. Autrement dit, la portion centrale 36C traverse le socle 12 et la première ouverture 12A est un trou formé dans le socle 12. Avantageusement, un joint est prévu dans l'ouverture 12A, au travers duquel s'étend la portion centrale 36C, afin d'assurer l'étanchéité du socle 12. Le joint est, par exemple, un joint en élastomère.

On comprend ainsi que l'extrémité basse 36A du premier crochet est disposée à l'intérieur du socle 12, alors que l'extrémité haute 36B est disposée à l'extérieur du socle 12. Ainsi, la première ouverture 12A du socle 12 traverse le socle, en reliant l'intérieur du socle à l'extérieur du socle. De plus, le crochet 36, et plus particulièrement la portion centrale 36C, s'étend au travers de la première ouverture 12A du socle 12 en traversant le socle, c'est-à-dire que le crochet 36 s'étend depuis l'intérieur du socle jusqu'à l'extérieur du socle. De cette manière, l'extrémité basse 36A, tout comme le premier levier 34, sont disposés à l'intérieur du socle 12 et sont inaccessibles depuis l'extérieur du socle, notamment par un utilisateur de l'appareil 10. En outre, le joint prévu dans l'ouverture 12A permet d'éviter l'infiltration de liquides et solides depuis l'extérieur du socle 12 jusqu'à l'intérieur du socle au travers de la première ouverture 12A, de sorte à prolonger la durée de vie de l'appareil 10, notamment en protégeant le moteur électrique 24.

Dans l'exemple, la portion centrale 36C allongée est cylindrique, de sorte qu'elle est droite et s'étend selon un premier axe de crochet Z2. En variante non-représentée de l'invention, la portion centrale 36C présente une forme différente et/ou n'est pas droite. Par exemple, la portion centrale 36C est cintrée ou courbe.

Puisque la portion centrale 36C s'étend au travers de la première ouverture 12A du socle 12, la première ouverture du socle guide la portion centrale lorsque le premier crochet 36 est mis en mouvement par le premier levier 34. Plus précisément, le guidage de la portion centrale 36C par la première ouverture 12A du socle 12 rend le premier crochet 36 apte à coulisser, par rapport au socle 12, le long de sa portion centrale 36C, entre une position de verrouillage et une position de déverrouillage, et conjointement, pivoter, par rapport au socle, autour d'un premier axe de pivotement X3 parallèle au premier axe de levier X1 et au deuxième axe de levier X2 et passant par la première ouverture 12A du socle 12, entre une orientation de verrouillage et une orientation de déverrouillage. On comprend que, dans l'exemple, le coulissement du premier crochet 36 s'effectue selon le premier axe de crochet Z2. On note que le premier axe de pivotement X3 est fixe par rapport au socle 12. On comprend ainsi que c'est précisément parce que la portion centrale 36C traverse le socle 12 en s'étendant dans la première ouverture 12A, c'est-à-dire s'étend depuis l'intérieur jusqu'à l'extérieur du socle, que la portion centrale 36C est guidée par la première ouverture 12A du socle pour que le premier crochet 36 présente un mouvement conjoint de coulissement et de pivotement.

On note que le guidage de la portion centrale 36C par la première ouverture 12A forme une liaison mécanique entre le premier crochet 36 et le socle 12 de type liaison sphère/cylindre, également couramment désignée liaison linéaire annulaire. Ce guidage est favorisé par la présence du joint dans l'ouverture 12A.

En pratique, la première ouverture 12A présente des dimensions légèrement supérieures aux dimensions de la portion centrale 36C, de sorte à permettre le pivotement du premier crochet 36 autour de l'axe de pivotement X3. Autrement dit, un jeu de fonctionnement est prévu entre la portion centrale 36C et la première ouverture 12A, autorisant le débattement de la portion centrale 36C permettant à la portion centrale de pivoter autour de l'axe de pivotement X3.

En pratique, le guidage de la portion centrale 36C par la première ouverture 12A n'empêche pas, à lui seul, le pivotement du premier crochet 36 autour d'un axe perpendiculaire au premier axe de pivotement X3, ni la rotation du premier crochet sur lui-même, dans l'exemple, autour du premier axe de crochet Z2, mais ces mouvements sont empêchés car l'extrémité basse 36A du premier crochet 36 est attachée au premier levier 34 et n'est mobile par rapport au premier levier 34 qu'en rotation autour du deuxième axe de levier X2.

La position de verrouillage et l'orientation de verrouillage du premier crochet 36 sont conjointement atteintes lorsque le premier levier 34 est en orientation de verrouillage et la position de déverrouillage et l'orientation de déverrouillage du premier crochet 36 sont conjointement atteintes lorsque le premier levier 34 est en orientation de déverrouillage.

En configuration verrouillée de l'appareil 10, le premier levier 34 est en orientation de verrouillage et le premier crochet 36 est en position de verrouillage et en orientation de verrouillage. En configuration déverrouillée de l'appareil 10, le premier levier 34 est en orientation de déverrouillage et le premier crochet 36 est en position de déverrouillage et en orientation de déverrouillage.

Lorsque le premier levier 34 est opéré entre ses orientations de verrouillage et de déverrouillage, le mouvement de rotation de l'extrémité basse 36A du premier crochet 36 autour du premier axe de levier X1, en association avec le guidage de la portion centrale 36C par la première ouverture 12A du socle 12, conduit l'extrémité haute 36B du premier crochet 36 à se déplacer selon un mouvement elliptique, ce qui permet d'engager ou de dégager l'extrémité haute du premier crochet avec le premier ergot 20A du couvercle 20 de manière efficace et fiable.

Avantageusement, mais de manière optionnelle, le système de verrouillage 32 comporte également un deuxième levier 38 et un deuxième crochet 40, qui fonctionnent respectivement comme le premier levier 34 et comme le premier crochet 36, de manière symétrique.

Ainsi, le deuxième levier 38 est mobile en rotation par rapport au socle 12 autour d'un troisième axe de levier X4 et le deuxième crochet 40 comporte une extrémité basse 40A attachée au deuxième levier 38 est mobile en rotation par rapport au deuxième levier autour d'un quatrième axe de levier X5 parallèle au troisième axe de levier X4, une extrémité haute 40B prévue pour coopérer avec le couvercle 20, en présentant dans l'exemple une forme de crochet qui coopère avec un deuxième ergot 20B du couvercle 20, et une portion centrale allongée 40C qui relie l'extrémité basse 40A à l'extrémité haute 40B et qui s'étend au travers d'une deuxième ouverture 12B du socle 12 le long d'un deuxième axe de crochet Z3. Le deuxième crochet 40 est guidé par la deuxième ouverture 12B du socle 12 de sorte à être apte à coulisser le long de sa portion centrale 40C entre une position de verrouillage et une position de déverrouillage, et à pivoter autour d'un deuxième axe de pivotement X6 parallèle au quatrième axe de levier X5 et au premier axe de pivotement X3 et passant par la deuxième ouverture du socle, de manière similaire au premier crochet 36. Comme celle du premier crochet 36, l'extrémité haute 40B du deuxième crochet 40 se déplace selon un mouvement elliptique. Dans l'exemple, le troisième axe de levier X4 est parallèle au premier axe de levier X1. Autrement dit, dans l'exemple, le premier levier 34 est parallèle au deuxième levier 38. Avantageusement, dans l'exemple, le premier levier 34 et le deuxième levier 38 s'étendent dans un même plan, qui est parallèle à l'axe principal Z1 et qui, de préférence, passe par l'axe principal Z1. On note que le quatrième axe de levier X5 est mobile par rapport au socle 12. Tout comme pour le premier crochet 36, l'extrémité basse 40A du deuxième crochet est disposée à l'intérieur du socle 12, alors que l'extrémité haute 40B est disposée à l'extérieur du socle 12. Ainsi, la deuxième ouverture 12B du socle 12 traverse le socle, en reliant l'intérieur du socle à l'extérieur du socle. De plus, le deuxième crochet 40, et plus particulièrement la portion centrale 40C, s'étend au travers de la deuxième ouverture 12B du socle 12 en traversant le socle, c'est-à-dire que le deuxième crochet 40 s'étend depuis l'intérieur du socle jusqu'à l'extérieur du socle. De cette manière, l'extrémité basse 40A, tout comme le deuxième levier 38, sont disposés à l'intérieur du socle 12 et sont inaccessibles depuis l'extérieur du socle, notamment par un utilisateur de l'appareil 10. En outre, un joint prévu dans l'ouverture 12B et au travers duquel s'étend la portion centrale 40C, de préférence en élastomère, permet d'éviter l'infiltration de liquides et solides depuis l'extérieur du socle 12 jusqu'à l'intérieur du socle au travers de la deuxième ouverture 12B et favorise également le guidage de la portion centrale 40C dans la deuxième ouverture 12B.

La position de verrouillage et l'orientation de verrouillage du deuxième crochet 40 sont conjointement atteintes lorsque le deuxième levier 38 est en orientation de verrouillage et la position de déverrouillage et l'orientation de déverrouillage du deuxième crochet sont conjointement atteintes lorsque le deuxième levier est en orientation de déverrouillage.

En configuration verrouillée de l'appareil 10, le deuxième levier 38 est en orientation de verrouillage et le deuxième crochet 40 est en position de verrouillage et en orientation de verrouillage. En configuration déverrouillée de l'appareil 10, le deuxième levier 38 est en orientation de déverrouillage et le deuxième crochet 40 est en position de déverrouillage et en orientation de déverrouillage.

Ainsi, le couvercle amovible 20 est maintenu sur le reste de l'appareil 10 par les deux crochets 36, 40, qui coopèrent respectivement avec les deux ergots 20A, 20B.

Pour entraîner le premier levier 34 et le deuxième levier 38 en rotation, respectivement autour du premier axe de levier X1 et du troisième axe de levier X4, entre leurs orientations de verrouillage et de déverrouillage, le système de verrouillage 32 comporte un dispositif d'actionnement 42.

Le fonctionnement du dispositif d'actionnement 42 est particulièrement visible sur les figures 6, 7 et 8.

Dans l'exemple, le dispositif d'actionnement 42 comporte une tringle 44, qui est mobile en rotation par rapport au socle 12 autour d'un axe de tringle Y1, entre une orientation de verrouillage et une orientation de déverrouillage. Dans l'exemple, l'axe de tringle Y1 est orthogonal à l'axe principal Z1, ce qui améliore le fonctionnement du dispositif d'actionnement 42 mais n'est pas obligatoire : l'axe de tringle Y1 peut également être oblique avec l'axe principal Z1, c'est-à-dire non-parallèle à l'axe principal Z1. De plus, dans l'exemple, l'axe de tringle Y1 est également orthogonal au premier axe de levier X1 et au troisième axe de levier X4, ce qui améliore le fonctionnement du dispositif d'actionnement 42 mais n'est pas obligatoire. En outre, dans l'exemple, l'axe de tringle Y1 est perpendiculaire à l'axe principal Z1, ce qui améliore le fonctionnement du dispositif d'actionnement 42 mais n'est pas obligatoire.

Ici, le dispositif d'actionnement 42 comporte une poignée 46, attachée à la tringle 44 et mobile en rotation par rapport au socle 12 autour de l'axe de tringle Y1. La poignée 46 est prévue pour être actionnée par un utilisateur, de sorte à permettre à l'utilisateur d'entraîner en rotation la tringle 44 autour de l'axe de tringle Y1 entre ses orientations de verrouillage et de déverrouillage. Avantageusement, une seule main est suffisante pour agir sur la poignée 46. En outre, la poignée 46 permet à l'utilisateur de disposer d'un bras de levier suffisant pour efficacement agir sur la tringle 44, à l'encontre de l'effort exercé par l'organe de rappel 30D.

Le dispositif d'actionnement 42 comporte également une première bielle 48, prévue pour entraîner en rotation le premier levier 34 à partir de la rotation de la tringle 44. La première bielle 48 comporte une première extrémité 48A, attachée à la tringle 44 de sorte à être mobile en rotation par rapport à la tringle autour d'un premier axe de bielle Y2 parallèle à l'axe de tringle Y1. On note que le premier axe de bielle Y2 est mobile par rapport au socle 12.

La tringle 44 et la première bielle 48 sont agencées de sorte qu'une rotation de la tringle 44 autour de l'axe de tringle Y1 entraîne un déplacement de la première extrémité 48A de la première bielle 48, dans un mouvement d'arc de cercle autour de l'axe de tringle Y1. Autrement dit, la première extrémité 48A de la première bielle 48 tourne autour de la tringle 44 lorsque la tringle est en rotation autour de l'axe de tringle Y1.

Dans l'exemple, pour obtenir ce déplacement en arc de cercle, la première extrémité 48A de la première bielle 48 est attachée à une première biellette 50 du dispositif d'actionnement 42, qui s'étend depuis la tringle 44 perpendiculairement à l'axe de tringle Y1, ici en étant monobloc avec la tringle. La première extrémité 48A de la première bielle 48 est apte à pivoter par rapport à la première biellette 50 autour du premier axe de bielle Y2. La première bielle 48 est ainsi attachée à la première biellette 50 au niveau du premier axe de bielle Y2.

La première bielle 48 comporte également une deuxième extrémité 48B, attachée au premier levier 34 de sorte à être mobile en rotation par rapport au premier levier autour d'un deuxième axe de bielle X7 parallèle au premier axe de levier X1 et d'un troisième axe de bielle Y3 parallèle au premier axe de bielle Y2. On note que le troisième axe de bielle Y3 est mobile par rapport au socle 12.

Puisque la première bielle 48 est attachée au premier levier 34 et à la tringle 44, un mouvement de rotation de la tringle 44 entraîne un pivotement de la première bielle, dans un plan perpendiculaire à l'axe de tringle Y1, et une translation de la première bielle, provoquée par le mouvement d'arc de cercle de sa première extrémité 48A.

Autrement dit, lorsque la première bielle 48 est déplacée par la tringle 44, la première bielle entraîne en rotation le premier levier 34 autour du premier axe de levier X1, en imposant un déplacement du premier levier 34 au niveau du deuxième axe de bielle X7.

En outre, le fait que la deuxième extrémité 48B de la première bielle 48 soit mobile en rotation autour du troisième axe de bielle Y3 par rapport au premier levier 34 permet à la première bielle de pivoter dans un plan perpendiculaire à l'axe de tringle Y1 sans entraîner de mouvement du premier levier 34 dans ce plan. En pratique, la mobilité de la deuxième extrémité 48B de la première bielle 48 autour du troisième axe de bielle Y3 est obtenu grâce au jeu de fonctionnement présent entre la deuxième extrémité 48B de la première bielle 48 et le premier levier 34.

Avantageusement, le dispositif d'actionnement 42 comporte également une deuxième bielle 52, prévue pour entraîner en rotation le deuxième levier 38 à partir de la rotation de la tringle 44 et qui fonctionne comme la première bielle 48. Ainsi, la deuxième bielle 52 comporte une première extrémité 52A attachée à la tringle 44 par l'intermédiaire d'une deuxième biellette 54 en étant mobile en rotation par rapport à la deuxième biellette 54 et par rapport à la tringle 44 autour du premier axe de bielle Y2. La deuxième bielle 52 comporte également une deuxième extrémité 52B, attachée au deuxième levier 38 de sorte à être mobile en rotation par rapport au deuxième levier autour d'un quatrième axe de bielle X8 parallèle au troisième axe de levier X4 et du troisième axe de bielle Y3 parallèle au premier axe de bielle Y2.

Le dispositif d'actionnement 42 est configuré pour qu'une rotation de la tringle 44 autour de l'axe de tringle Y1 entre ses orientations de verrouillage et de déverrouillage entraîne en rotation le premier levier 34 autour du premier axe de levier X1, par l'intermédiaire de la première bielle 48, et entraîne en rotation le deuxième levier 38 autour du troisième axe de levier X4, par l'intermédiaire de la deuxième bielle 52, et opère ainsi l'appareil 10 entre ses configurations verrouillée et déverrouillée respectivement, l'appareil étant en configuration verrouillée lorsque la tringle 44 est en orientation de verrouillage et l'appareil étant en configuration déverrouillée lorsque la tringle est en orientation de déverrouillage.

Ainsi, l'actionnement de la poignée 46 entraîne le déplacement du premier crochet 36 et du deuxième crochet 40 et opère donc l'appareil 10 entre ses configurations verrouillée et déverrouillée.

Le dispositif d'actionnement 42 est donc particulièrement avantageux pour transformer efficacement une rotation de la poignée 46 en une rotation des deux leviers 34, 38 et ainsi en un mouvement des deux crochets 36, 40. Grâce au système de verrouillage 32 et au dispositif d'actionnement 42, une rotation de la poignée 46 est suffisante pour actionner les deux crochets 36, 40 et ainsi opérer l'appareil 10 entre ses configurations verrouillée et déverrouillée. L'appareil 10 est ainsi particulièrement facile à verrouiller et à déverrouiller par un utilisateur, y compris à une seule main.

De manière particulièrement avantageuse, le système de freinage 30 est opéré par le système de verrouillage 32, en particulier par le dispositif d'actionnement 42. Plus précisément, l'organe de freinage 30B est déplacé en translation par rapport au socle 12, selon l'axe principal Z1, entre ses positions de libération et de freinage, par le dispositif d'actionnement 42.

À cet effet, l'organe de freinage 30B est attaché à la tringle 44 de sorte à être mobile en rotation par rapport à la tringle autour de l'axe de tringle Y1 et fixe en translation par rapport à la tringle selon l'axe principal Z1. Autrement dit, l'organe de freinage 30B est opéré entre ses positions de libération et de freinage par la tringle 44.

En outre, la tringle 44 est mobile en translation par rapport au socle 12 le long de l'axe principal Z1, entre une position de libération et une position de freinage. La position de libération de l'organe de freinage 30B est atteinte lorsque la tringle 44 est en position de libération et la position de freinage de l'organe de freinage 30B est atteinte lorsque la tringle est en position de freinage. Ainsi, l'axe de tringle Y1 est mobile par rapport au socle 12.

En pratique, la position de libération de la tringle 44 est atteinte lorsque le couvercle 20 est monté sur le reste de l'appareil 10 et lorsque la tringle 44 est dans son orientation de verrouillage. Lorsque le couvercle 20 n'est pas monté sur le reste de l'appareil 10 et/ou lorsque la tringle 44 est dans son orientation de déverrouillage, alors la tringle est dans sa position de freinage.

Avantageusement, la tringle 44 s'étend au travers d'un trou oblong 12C du socle 12, le trou oblong 12C s'étendant selon l'axe principal Z1, de sorte que la tringle 44 est apte à traverser le socle 12 sans que le socle 12 n'empêche la translation de la tringle 44 le long de l'axe principal Z1.

On comprend donc que la tringle 44 relie l'intérieur du socle 12 à l'extérieur du socle, permettant ainsi d'agir sur les leviers 36, 38 disposés à l'intérieur du socle 12 depuis l'extérieur du socle, dans l'exemple grâce à la poignée 46. Cette conception est particulièrement avantageuse pour améliorer la durabilité de l'appareil 10 tout en facilitant son utilisation. En effet, seule la poignée 46, les deuxièmes hautes 36B, 40B des crochets 36, 40 et une partie des portions centrales 36C, 40C des crochets 36, 40 sont situés à l'extérieur du socle 12, de sort que seules ces parties sont accessibles pour un utilisateur de l'appareil 10. À l'inverse, tous les autres éléments du système de verrouillage 32 et en particulier du dispositif d'actionnement 42 sont situées à l'intérieur du socle 12 et ne sont donc pas accessibles depuis l'extérieur du socle 12 pour un utilisateur de l'appareil 10 : ces autres éléments sont donc protégés, ce qui améliore la durée de vie de l'appareil 10, et ne sont pas visibles, ce qui améliore l'esthétique de l'appareil. En particulier, le mouvement elliptique des extrémités hautes des deux crochets, qui est provoqué par la simple rotation de la poignée 46, sans que l'ensemble du système du dispositif d'actionnement et du système de verrouillage permettant la transformation de la rotation de la poignée en mouvement elliptique de ces extrémités ne soit visible, est esthétiquement plaisant.

La tringle 44 étant fixe en translation par rapport à l'organe de freinage 30B, l'effort exercé par l'organe de rappel 30D sur l'organe de freinage 30B tend à ramener la tringle dans sa position de freinage. Autrement dit, la position de freinage de la tringle 44 est une position de repos, ou une position occupée par la tringle en l'absence d'autres efforts exercés sur la tringle ou l'organe de freinage 30B.

Ainsi, lorsque le couvercle 20 n'est pas monté sur le reste de l'appareil 10, une rotation de la tringle 44 depuis son orientation de déverrouillage vers son orientation de verrouillage n'entraîne pas de translation de la tringle depuis sa position de freinage vers sa position de libération, mais entraîne plutôt un coulissement du premier crochet 36 et du deuxième crochet 40 au-delà de leur position de verrouillage, sous l'effet de l'effort exercé par l'organe de rappel 30D sur l'organe de freinage 30B et sur la tringle 44. En effet, en l'absence du couvercle 20, rien n'empêche les premier et deuxième crochets 36, 40 de coulisser au-delà de leur position de verrouillage et l'effort exercé par l'organe de rappel 30D empêche le déplacement de la tringle 44 depuis sa position de freinage vers sa position de libération. Par conséquent, la rotation de la tringle entraîne un mouvement des premières extrémités 48A, 52A des première et deuxième bielles 48, 52 en arc de cercle autour de l'axe de tringle Y1, éloignant les première et deuxième bielles 48, 52 des première et deuxième ouvertures 12A, 12B du socle 12, ce qui entraîne une rotation des premier et deuxième leviers 34, 38 autour des premier et troisième axes de levier X1, X4 au-delà de leur orientation de verrouillage et ainsi un coulissement des premier et deuxième crochets 36, 40 au-delà de leur position de verrouillage.

Au contraire, lorsque le couvercle 20 est monté sur le reste de l'appareil 10, une rotation de la tringle 44 depuis son orientation de déverrouillage vers son orientation de verrouillage entraîne une translation de la tringle 44 depuis sa position de freinage vers sa position de libération, à l'encontre de l'effort exercé par l'organe de rappel 30D sur l'organe de freinage 30B et sur la tringle 44. En effet, lorsque le couvercle 20 est monté sur le reste de l'appareil 10, les premier et deuxième crochets 36, 40 sont en appui contre les premier et deuxième ergots 20A, 20B, de sorte que les premier et deuxième crochets 36, 40 ne peuvent pas coulisser au-delà de leur position de verrouillage. Par conséquent, la rotation de la tringle entraîne un mouvement des premières extrémités 48A, 52A des première et deuxième bielles 48, 52 en arc de cercle autour de l'axe de tringle Y1, mais puisque les première et deuxième bielles 48, 52 ne peuvent pas être éloignées des première et deuxième ouvertures 12A, 12B du socle 12 du fait de l'appui des premier et deuxième crochets 36, 40 contre les premier et deuxième ergots 20A, 20B, ce mouvement des premières extrémités 48A, 52A des première et deuxième bielles 48, 52 entraîne un déplacement de la tringle 44 depuis sa position de freinage vers sa position de libération, à l'encontre de l'effort exercé par l'organe de rappel 30D. Autrement dit, l'appui des premier et deuxième crochets 36, 40 contre les premier et deuxième ergots 20A, 20B permet de vaincre l'effort exercé par l'organe de rappel 30D sur l'organe de freinage 30B et sur la tringle 44.

Ainsi, le fonctionnement lié du système de freinage 30 et du système de verrouillage 32, obtenu car le dispositif d'actionnement 42 opère le système de freinage 30, permet d'assurer que l'organe de freinage 30B est en mesure d'atteindre sa position de libération uniquement lorsque le couvercle 20 est monté sur le reste de l'appareil 10 et lorsque les premier et deuxième crochets 36, 40 sont dans leur position de verrouillage et dans leur orientation de verrouillage. Autrement dit, le système de freinage 30 autorise le fonctionnement du moteur électrique 24 uniquement lorsque le couvercle 20 est monté sur le reste de l'appareil 10 et verrouillé par le système de verrouillage 32, empêchant tout démarrage du moteur électrique 24 lorsque l'outil rotatif 18 est accessible par un utilisateur.

On remarque, par ailleurs, qu'en configuration verrouillée de l'appareil 10, la tringle 44 est située entre la première extrémité 48A de la première bielle 48 et la deuxième extrémité 48B de la première bielle 48, selon l'axe principal Z1, et que la tringle 44 est située entre la première extrémité 52A de la deuxième bielle 52 et la deuxième extrémité 52B de la deuxième bielle 52, selon l'axe principal Z1. À l'inverse, en configuration déverrouillée de l'appareil 10, la première extrémité 48A de la première bielle 48 est située entre la tringle 44 et la deuxième extrémité 48B de la première bielle 48, selon l'axe principal Z1, et que la première extrémité 52A de la deuxième bielle 52 est située entre la tringle 44 et la deuxième extrémité 52B de la deuxième bielle 52, selon l'axe principal Z1. Ces positions sont obtenues grâce au mouvement d'arc de cercle centré sur l'axe de tringle Y1 que suivent la première extrémité 48A de la première bielle 48 et la première extrémité 52A de la deuxième bielle 52. Ainsi, la première extrémité 48A de la première bielle 48 et la première extrémité 52A de la deuxième bielle 52 sont déplacées vers le bas et la tringle 44 est déplacée vers le haut, selon l'axe principal Z1, c'est-à-dire selon un axe vertical, lorsque l'appareil 10 est opéré depuis sa configuration déverrouillée vers sa configuration verrouillée. À l'inverse, la première extrémité 48A de la première bielle 48 et la première extrémité 52A de la deuxième bielle 52 sont déplacées vers le haut et la tringle 44 est déplacée vers le bas, selon l'axe principal Z1, c'est-à-dire selon un axe vertical, lorsque l'appareil 10 est opéré depuis sa configuration verrouillée vers sa configuration déverrouillée.

Ces mouvements, obtenus en particulier grâce à l'appui des premier et deuxième crochets 36, 40 contre les premier et deuxième ergots 20A, 20B du couvercle 20 et grâce à l'effort exercé par l'organe de rappel 30D sur l'organe de freinage 30B, permettent de simultanément opérer les premier et deuxième leviers 34, 38 pour verrouiller et déverrouiller les premier et deuxième crochets 36, 40, et opérer le système de freinage 30 pour engager ou libérer l'organe de freinage 30B du dispositif de freinage 30A.

De manière particulièrement avantageuse, l'orientation de verrouillage et l'orientation de déverrouillage de la tringle 44 sont choisies de sorte qu'en configuration verrouillée de l'appareil 10, le premier axe de bielle Y2 est situé d'un premier côté d'un plan P passant par l'axe de tringle Y1 et par le troisième axe de bielle Y3, alors qu'en configuration déverrouillée de l'appareil 10, le premier axe de bielle Y2 est situé d'un deuxième côté du plan P, le deuxième côté étant opposé au premier côté. Ainsi, l'appareil 10 passe par une configuration d'alignement lorsque l'appareil est opéré entre sa configuration déverrouillée et sa configuration verrouillée, dans laquelle le premier axe de bielle Y2 passe par le plan P, c'est-à-dire dans laquelle le premier axe de bielle Y2, l'axe de tringle Y1 et le troisième axe de bielle Y3 sont alignés.

En outre, en configuration d'alignement de l'appareil, le premier axe de bielle Y2, l'axe de tringle Y1 et le troisième axe de bielle Y3 sont alignés selon l'axe principal Z1, c'est-à-dire qu'ils sont alignés parallèlement à la direction selon laquelle l'organe de rappel 30D exerce un effort sur l'organe de freinage 30B tendant à rapprocher l'organe de freinage du dispositif de freinage 30A. De plus, c'est en configuration d'alignement de l'appareil que l'effort exercé par l'organe de rappel 30D sur l'organe de freinage 30B est maximal. Ainsi, dans l'exemple, c'est en configuration d'alignement de l'appareil que la compression des deux ressorts de compression est maximale. Dès lors, le fait que le premier axe de bielle Y2, l'axe de tringle Y1 et le troisième axe de bielle Y3 ne sont pas alignés en configuration verrouillée de l'appareil 10 est particulièrement avantageux, car cela rend stable la configuration verrouillée de l'appareil 10. En effet, il est nécessaire d'exercer un effort à l'encontre de l'effort de rappel de l'organe de rappel 30D pour passer de la configuration verrouillée de l'appareil 10 jusqu'à la configuration d'alignement de l'appareil, empêchant un déverrouillage accidentel de l'appareil. Le dispositif d'actionnement 42 agit ainsi comme un dispositif mécanique de type genouillère.

Avantageusement, le dispositif de coupure 28 est monté de sorte à être opéré entre sa configuration d'alimentation et sa configuration de coupure par la tringle 44, de sorte que le dispositif de coupure est en configuration d'alimentation lorsque la tringle 44 est en position de libération et de sorte que le dispositif de coupure est en configuration de coupure lorsque la tringle 44 est en position de freinage. Ainsi, la configuration du dispositif de coupure 28 dépend de la position de la tringle 44 le long de l'axe principal Z1.

Dans l'exemple, le corps 28A est monté sur l'organe de freinage 30B de sorte à être fixe en translation par rapport à l'organe de freinage et mobile en translation par rapport au socle 12, selon l'axe principal Z1, et le palpeur 28B est monté sur le socle 12 de sorte à être fixe par rapport au socle. Ainsi, lorsque l'organe de freinage 30B est déplacé par la tringle 44 entre sa position de libération et sa position de freinage, le palpeur 28B est déplacé par rapport au corps 28A, basculant le dispositif de coupure 28 entre ses configurations d'alimentation et de coupure.

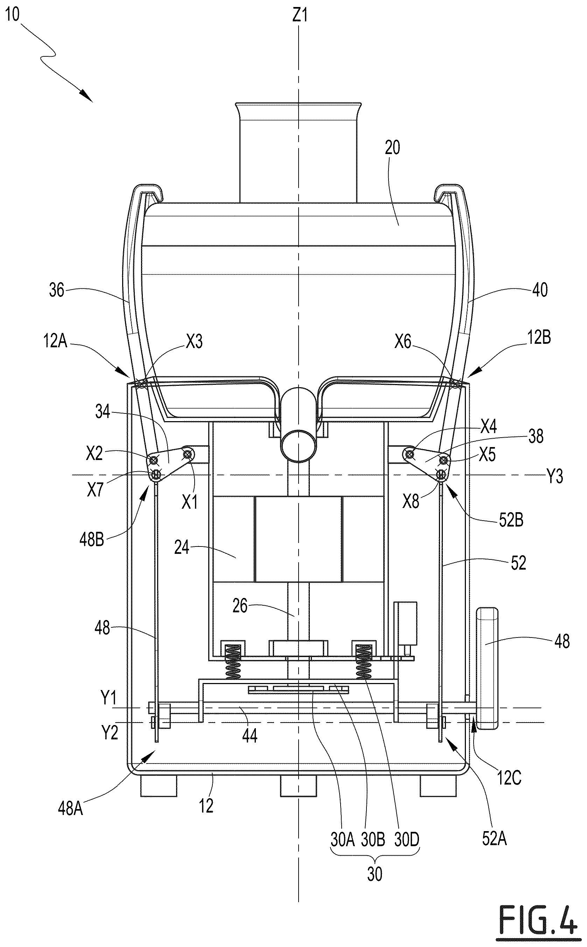

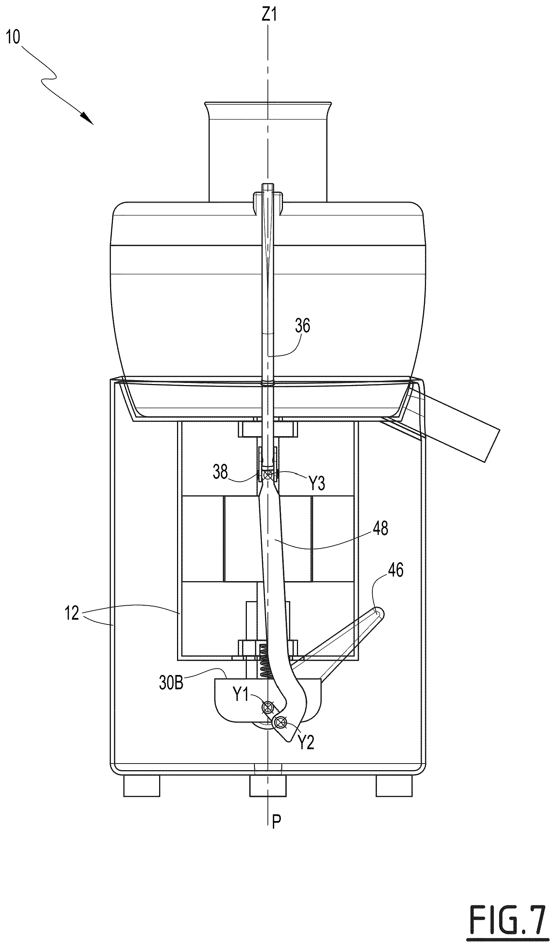

Avantageusement, l'appareil 10 est également opérable en une configuration intermédiaire illustrée sur les figures 4 et 7, atteinte entre la configuration verrouillée et la configuration déverrouillée, dans laquelle l'extrémité haute 36B du premier crochet 36 et l'extrémité haute 40B du deuxième crochet 40 sont en contact avec le couvercle 20, empêchant un retrait du couvercle, et dans laquelle le dispositif de coupure 28 est en configuration de coupure. En outre, en configuration intermédiaire, le système de freinage 30 ne s'oppose pas à la rotation du moteur électrique 24, c'est-à-dire que l'organe de freinage 30B est en position de libération.

Ainsi, lorsque l'appareil 10 passe de sa configuration verrouillée jusqu'à sa configuration déverrouillée, il passe par sa configuration intermédiaire. En configuration verrouillée, l'organe de freinage 30B est en position de libération et le dispositif de coupure 28 est en configuration d'alimentation, de sorte que le moteur électrique 24 peut fonctionner et l'arbre moteur 26 et l'outil rotatif 18 peuvent être entraînés en rotation autour de l'axe principal Z1. En configuration intermédiaire de l'appareil 10, l'organe de freinage 30B est toujours en position de libération mais le dispositif de coupure 28 est en configuration de coupure, de sorte que le moteur électrique 24 n'est pas alimenté, mais l'arbre moteur 26 et l'outil rotatif 18 peuvent toujours tourner autour de l'axe principal Z1, puisque leur rotation n'est pas freinée par le système de freinage 30. En configuration déverrouillée de l'appareil 10, l'organe de freinage 30B est en position de freinage et le dispositif de coupure 28 est en configuration de coupure, de sorte que le moteur électrique 24 n'est pas alimenté et de sorte que la rotation de l'arbre moteur 26 et de l'outil rotatif 18 autour de l'axe principal Z1 est empêchée par le système de freinage 30.

Cette séquence d'ouverture est particulièrement avantageuse pour accroitre la durée de vie de l'appareil 10, car elle empêche le freinage de l'arbre moteur 26 par le système de freinage 30 lorsque le dispositif de coupure 30 est en configuration d'alimentation, c'est-à-dire lorsque le moteur électrique 24 est susceptible de fonctionner. Autrement dit, la rotation de l'arbre moteur 26 ne peut être freinée que lorsque le moteur électrique 24 est à l'arrêt, évitant ainsi d'appliquer un freinage au moteur électrique lorsque ce dernier est en fonctionnement, ce qui serait susceptible d'endommager le moteur électrique.

En outre, et comme cela ressort des figures 4 et 5 et des figures 7 et 8, les premier et deuxième leviers 34, 38 atteignent leur orientation de verrouillage dès la configuration intermédiaire de l'appareil 10. Cela est, notamment, dû à l'agencement de la tringle 44, des première et deuxième bielles 48, 52 et des premier et deuxième leviers 34, 38. Ainsi, en configuration intermédiaire, les premier et deuxième crochets 36, 40 sont dans leur position de verrouillage et dans leur orientation de verrouillage. Autrement dit, le mouvement des premier et deuxième crochets 36, 40 a lieu entre les configurations de déverrouillage et intermédiaire de l'appareil 10 et les premier et deuxième crochets 36, 40 restent dans leur position de verrouillage et dans leur orientation de verrouillage entre la configuration intermédiaire et la configuration verrouillée de l'appareil 10. De plus, on remarque, notamment sur les figures 3 à 5, que la compression de l'organe de rappel 30D, ici des deux ressorts 30D, a essentiellement lieu entre la configuration intermédiaire et la configuration verrouillée de l'appareil 10, notamment grâce à l'agencement de la bielle 44, de l'organe de freinage 30B, des première et deuxième bielles 48, 52 et des première et deuxième biellettes 50, 54. Or, c'est pendant la compression des ressorts 30D que l'effort exercé par l'utilisateur sur la poignée 46 est maximum. Ainsi, lorsque les efforts exercés sur la poignée sont maximums, les premier et deuxième crochets 36, 40 ne sont pas en mouvement, de sorte que les efforts exercés sur les premier et deuxième leviers 36, 38 sont minimums, réduisant l'usure des premier et deuxième leviers et augmentant ainsi la longévité de l'appareil 10. Même en l'absence de mouvement des premier et deuxième crochets 36, 40, la compression de l'organe de rappel 30D entre les configurations intermédiaire et de verrouillage de l'appareil 10 provoque toutefois une mise en compression des premier et deuxième crochets 36, 40 contre le couvercle amovible 20, dans un effort de bridage assurant une fermeture sécurisée de l'appareil 10.

De plus, lorsque l'appareil 10 est opéré depuis sa configuration verrouillée vers sa configuration déverrouillée, on note que la coupure électrique du moteur électrique 24 intervient grâce au dispositif de coupure 28 avant que les premier et deuxième crochets 36, 38 ne commencent à être déplacés depuis leurs orientation et position de verrouillage vers leurs orientation et position de déverrouillage, ce qui assure un arrêt du moteur électrique avant que le retrait du couvercle amovible 20 ne soit possible. Dès lors, même en cas de manipulation rapide de la poignée 46 par un utilisateur, l'outil rotatif 18 ne peut pas être atteint avant d'avoir été freiné. L'appareil 10 selon l'invention est donc particulièrement sûr à utiliser, tout en étant simple à verrouiller et à déverrouiller grâce au système de verrouillage 32.

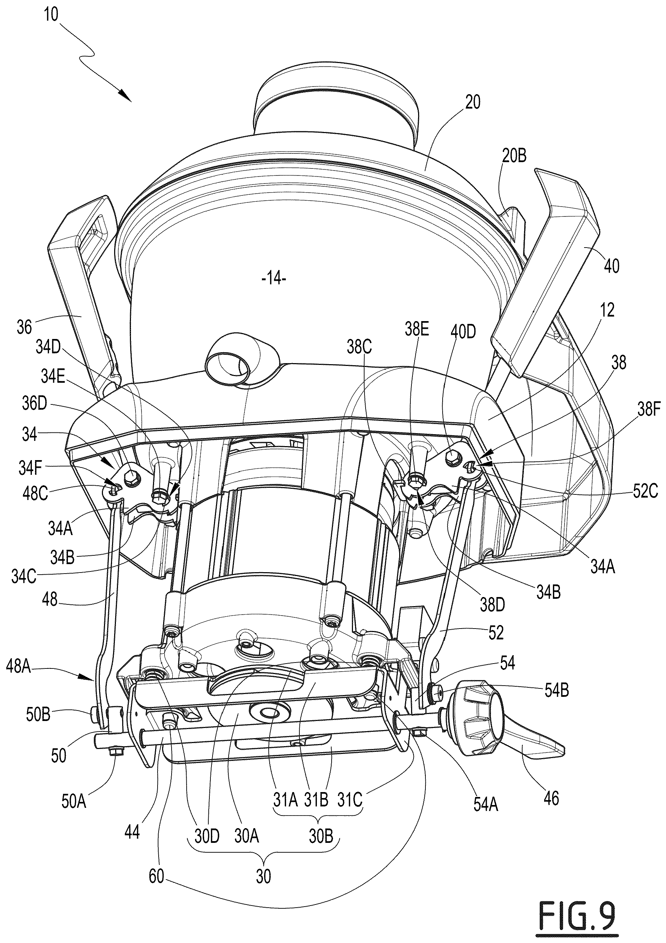

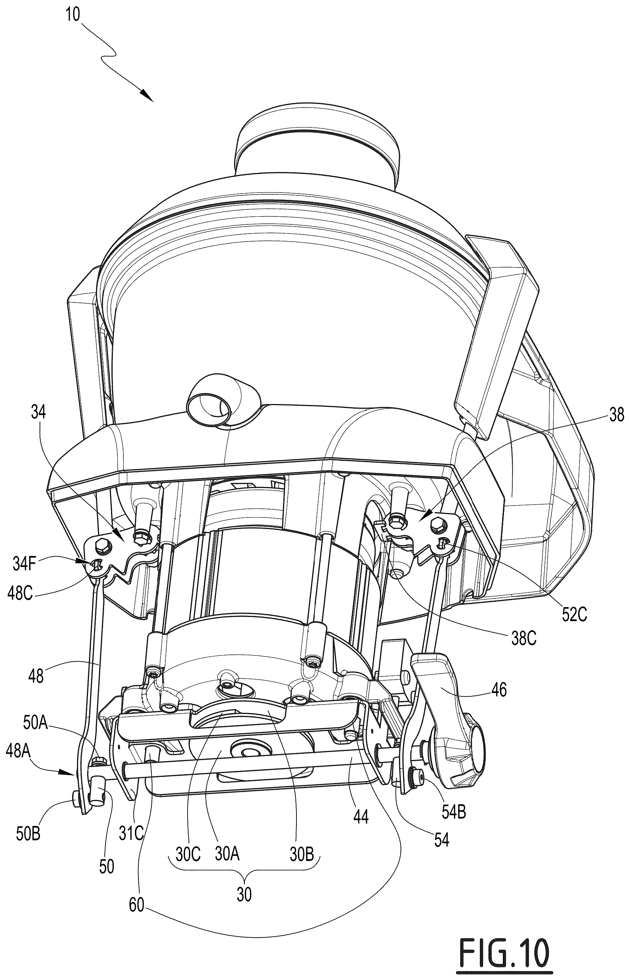

Un appareil de préparation culinaire 10 selon un deuxième mode de réalisation de l'invention est représenté en figures 9 et 10. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes de réalisation.

En outre, si un composant est mentionné dans la description du deuxième mode de réalisation sans être représenté sur les figures 9 et 10, il correspond au même élément représenté sur les figures 1 à 8 pour le premier mode de réalisation. L'appareil 10 du deuxième mode de réalisation est montré en configuration déverrouillée à la figure 9 et en configuration verrouillée à la figure 10.

En pratique, l'appareil de préparation culinaire 10 du deuxième mode de réalisation a un fonctionnement identique à celui du premier mode de réalisation mais est moins onéreux à fabriquer que celui du premier mode de réalisation.

En particulier, le système de verrouillage 32 de l'appareil de préparation culinaire 10 du deuxième mode de réalisation est particulièrement peu onéreux à fabriquer, tout en étant fiable et robuste.

Notamment, le premier levier 34 comporte une première plaque 34A et une deuxième plaque 34B, qui s'étendent parallèlement l'une à l'autre et parallèlement au premier axe de levier X1. En outre, le premier levier 34 est mobile en rotation par rapport au socle 12 au niveau du premier axe de levier X1 grâce à une plaque de pivot 34C, qui est montée entre la première plaque 34A et la deuxième plaque 34B et qui s'étend au travers d'ouvertures 34D de la première plaque et de la deuxième plaque, les ouvertures 34D étant traversées par le premier axe de levier X1. La plaque de pivot 34C est fixée au socle 12 à l'aide de vis 34E, qui maintiennent la plaque de pivot 34C immobile par rapport au socle. Cette conception permet d'obtenir une liaison fiable et robuste du premier levier 34A sur le socle 12.

De plus, l'extrémité basse 36A du premier crochet 36 est attachée au premier levier 34 par l'intermédiaire d'une vis 36D s'étendant selon le deuxième axe de levier X2, ce qui permet d'articuler de manière efficace le premier crochet 36 par rapport au premier levier 34 au niveau du deuxième axe de levier X2.

En outre, la première plaque 34A et la deuxième plaque 34B présentent des ouvertures 34F, qui sont traversées par le deuxième axe de bielle X7. La deuxième extrémité 48B de la première bielle 48 est disposée entre la première plaque 34A et la deuxième plaque 34B du premier levier 34 et présente une forme de « T », avec deux bras 48C s'étendant selon le deuxième axe de bielle X7 de sorte à s'étendre au travers des ouvertures 34F de la première plaque et de la deuxième plaque. La coopération des deux bras 48C avec les ouvertures 34F permet à la première bielle 48 de pivoter par rapport au premier levier 34 autour du deuxième axe de bielle X7 en empêchant les autres mouvements de la première bielle par rapport au premier levier.

La conception du deuxième levier 38, du deuxième crochet 40 et de la deuxième bielle 52 sont avantageusement identiques à celles du premier levier 34 et de la première bielle 48. Ainsi, le deuxième levier 38 comporte une première plaque 38A et une deuxième plaque 38B présentant des ouvertures 38D et 38F, et une plaque de pivot 38C maintenue fixée au socle 12 par une vis 38E. L'extrémité basse 40A du deuxième crochet 40 est attachée au deuxième levier 38 par l'intermédiaire d'une vis 40D s'étendant selon le quatrième axe de levier X5. La deuxième extrémité 52B de la deuxième bielle 52 présente une forme de « T » avec deux bras 52C s'étendant selon le quatrième axe de bielle X8.

Avantageusement, les premières plaque 34A et 38A, les deuxièmes plaques 34B et 48B, les plaques de pivot 34C et 38C, les première et deuxième bielles 48, 52 sont fabriquées par découpe laser, permettant d'obtenir des pièces particulièrement peu onéreuses.

Avantageusement, et comme visible sur les figures 9 et 10, les ouvertures 34D, 34F, 38D et 38F ne sont pas circulaires mais présentent la forme de deux éventails, ou deux secteurs circulaires de disque, joints par leurs sommets. Ainsi, les ouvertures 34D, 34F, 38D et 38F permettent de limiter le débattement angulaire respectivement de la plaque de pivot 34C, des deux bras 48C de la première bielle 48, de la plaque de pivot 34C et des deux bras 52C de la deuxième bielle 52.

Dans le deuxième mode de réalisation, l'organe de freinage 30B comporte une tôle de freinage 31A, qui s'étend parallèlement au dispositif de freinage 30A et perpendiculairement à l'axe principal Z1, deux parois latérales 31B, qui s'étendent depuis la tôle de freinage 31A perpendiculairement à la tôle de freinage 31A et permettent de rigidifier l'organe de freinage 30B, et deux rebords 31C, qui s'étendent depuis la tôle de freinage 31A perpendiculairement à l'axe de tringle Y1 en étant traversées par la tringle 44. Ainsi, les deux rebords 31C assurent la fixation entre l'organe de freinage 30B et la tringle 44, en empêchant une translation de l'organe de freinage par rapport à la tringle mais en autorisant une rotation de l'organe de freinage par rapport à la tringle, autour de l'axe de tringle Y1. L'organe de freinage 30B est avantageusement fabriqué à partir d'une tôle plane découpée puis pliée, permettant d'obtenir une pièce particulièrement peu onéreuse, tout en assurant une liaison fiable entre l'organe de freinage 30B et la tringle 44.

Dans le deuxième mode de réalisation, la première biellette 50 attachant la première extrémité 48A de la première bielle 48 à la tringle 44 n'est pas monobloc avec la tringle 44, mais est fixée à la tringle à l'aide d'un organe de fixation 50A, de préférence une vis. En outre, la première biellette 50 est reliée à la première extrémité 48A de la première bielle 48 par l'intermédiaire d'un organe de fixation 50B, ici une vis épaulée, qui permet de solidariser la première extrémité 48A à la biellette 50 sans empêcher une rotation de la première extrémité 48A par rapport à la biellette 50 autour du premier axe de bielle Y2. La conception de la deuxième biellette 54 est identique, cette dernière étant fixée à la tringle 44 à l'aide d'un organe de fixation 54A et à la deuxième bielle à l'aide d'un organe de fixation 54B. Cette conception rend le dispositif d'actionnement 42 particulièrement peu onéreux à réaliser, car le coût de fabrication des biellettes 50, 54 et leur fixation aux bielles 48, 52 et à la tringle 44 est faible.

Dans le deuxième mode de réalisation, l'organe de rappel 30D comporte quatre ressorts de compression s'étendant selon l'axe principal Z1 entre l'organe de freinage 30B et le socle 12, dont deux seulement sont visibles sur les figures 9 et 10. L'utilisation de quatre ressorts de compression permet d'améliorer le guidage de l'organe de freinage 30B en translation selon l'axe principal Z1, en comparaison avec les deux ressorts de compression utilisés dans le premier mode de réalisation Avantageusement, la tôle de freinage 31A est sensiblement rectangulaire et les quatre ressorts de compression sont disposés aux quatre coins de la tôle de freinage 31A.

Avantageusement, dans le deuxième mode de réalisation, l'organe de freinage 30B est guidé en translation selon l'axe principal Z1, par rapport au socle 12, par un dispositif de guidage 60. De préférence, le dispositif de guidage 60 s'oppose, en outre, à une rotation de l'organe de freinage 30B autour de l'axe principal Z1. Le dispositif de guidage 60 permet ainsi de faciliter la translation de l'organe de freinage 30B et d'empêcher d'autres mouvements de l'organe de freinage 30B. En outre, en guidant l'organe de freinage 30B, le dispositif de guidage permet également de guider la tringle 44 dans son mouvement de translation selon l'axe principal Z1.

Dans l'exemple du deuxième mode de réalisation, le dispositif de guidage 60 comporte deux axes de guidage 60, qui sont solidaires du socle 12 et qui s'étendent chacun parallèlement à l'axe principal Z1 en traversant l'organe de freinage 30B, plus précisément en traversant deux ouvertures de l'organe de freinage 30B. Ainsi, les deux axes de guidage 60 ne s'opposent pas à une translation de l'organe de freinage 30B selon l'axe principal Z1, mais empêchent une translation de l'organe de freinage 30B perpendiculairement à l'axe principal Z1. En outre, les deux axes de guidage 60 sont disposés de part et d'autre de l'arbre moteur 26, dans un plan perpendiculaire à l'axe principal Z1, permettant ainsi d'empêcher efficacement une rotation de l'organe de freinage 30B autour de l'axe principal Z1. Ainsi, lorsque l'organe de freinage 30B est en position de freinage, la rotation du dispositif de freinage 30A n'est pas susceptible d'entraîner l'organe de freinage 30B en rotation autour de l'axe principal Z1 et le freinage du dispositif de freinage 30A et ainsi de l'arbre moteur 26 est alors efficace.

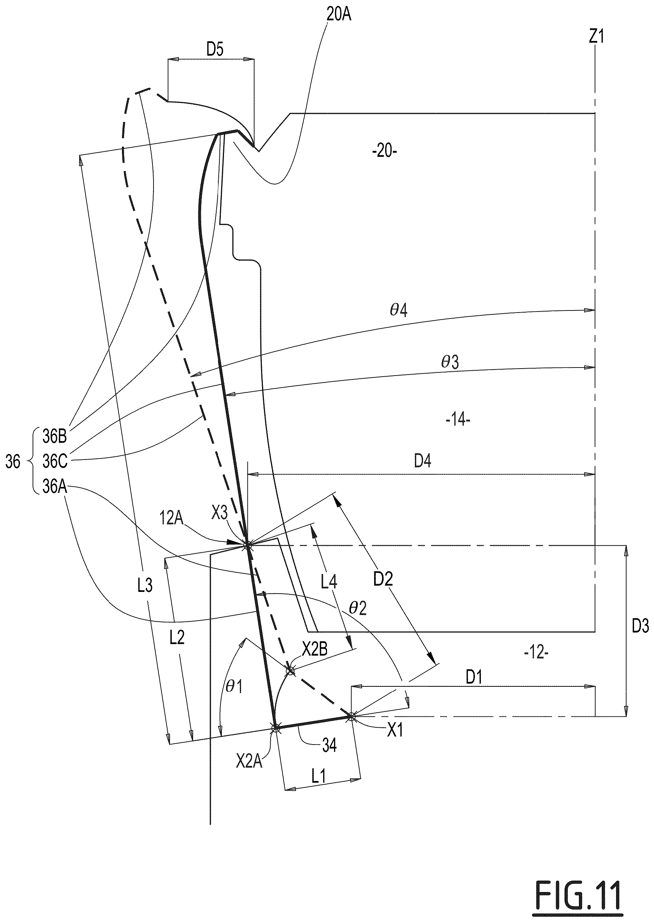

On décrit à présent, en référence à la figure 11, certaines caractéristiques géométriques et cinématiques de l'appareil 10 du deuxième mode de réalisation des figures 9 et 10. En pratique, les caractéristiques géométriques et cinématiques décrites en lien avec la figure 11 sont également applicables à l'appareil 10 du premier mode de réalisation des figures 1 à 8.

Dans ce qui suit, il est fait référence uniquement aux caractéristiques géométriques et cinématiques du premier levier 34 et du premier crochet 36 de l'appareil 10 du deuxième mode de réalisation, mais ce qui est décrit est également applicable au deuxième levier 38 et au deuxième crochet 40.

En particulier, sur la figure 11, le socle 12, la cuve à jus 14 et le couvercle amovible 20 sont représentés de manière schématique, par leur enveloppe extérieure. Le premier ergot 20A du couvercle 20 et la première ouverture 12A du socle 12, ainsi que le premier axe de pivotement X3, sont notamment représentés.

De plus, le premier levier 34 ainsi que le premier crochet 36 sont représentés de manière schématique.

Plus précisément, le premier levier 34 est uniquement illustré par l'intermédiaire de son profil entre le premier axe de levier X1 et le deuxième axe de levier X2. Le profil du premier levier 34 est illustré simultanément dans ses orientations de verrouillage et de déverrouillage, par un trait plein dans son orientation de verrouillage et par un trait en pointillé dans son orientation de déverrouillage, le deuxième axe de levier X2 étant référencé X2A dans l'orientation de verrouillage du premier levier 34 et étant référencé X2B dans l'orientation de déverrouillage du premier levier 34.

De même, le premier crochet 36 est uniquement illustré par l'intermédiaire de son profil, représenté par un trait plein dans son orientation et sa position de verrouillage et par un trait en pointillé dans son orientation et sa position de déverrouillage.

On remarque ainsi que, comme précisé auparavant, l'extrémité haute 36B du premier crochet 36 suit une trajectoire elliptique entre les configurations déverrouillée et verrouillée de l'appareil 10, c'est-à-dire un arc d'ellipse, cet arc d'ellipse étant mis en évidence sur la figure 11.

Le premier axe de pivotement X3, fixe par rapport au socle 12, est également représenté sur la figure 11.

De préférence, le premier axe de levier X1 est disposé à une distance D1 de l'axe principal Z1, c'est-à-dire de l'arbre moteur 26, mesurée perpendiculairement à l'axe principal Z1, comprise entre 60 mm et 90 mm, par exemple égale à 75 mm.

De préférence, une longueur L1 du premier levier 34, mesurée entre le premier axe de levier X1 et le deuxième axe de levier X2 dans un plan perpendiculaire au premier axe de levier X1, est comprise entre 18 mm et 29 mm, par exemple égale à 23,5 mm.

De préférence, un débattement angulaire θ1 du premier levier 34 autour du premier axe de levier X1, entre son orientation de verrouillage et son orientation de déverrouillage, est supérieur à 30°, de préférence encore compris entre 30° et 60°, de préférence encore compris entre 40° et 50°, par exemple égal à 45,5°.

De préférence, une distance D2, mesurée entre le premier axe de levier X1 et le premier axe de pivotement X3 dans un plan perpendiculaire au premier axe de levier X1, est comprise entre 45 mm et 78 mm, de préférence encore comprise entre 56 mm et 67 mm, par exemple égale à 61,4 mm.

Avantageusement, un rapport entre la distance D2 et la longueur L1 est compris entre 1,5 et 4,5, de préférence encore compris entre 2 et 3, par exemple égal à 2,6. Un tel rapport permet, à partir de la rotation du premier levier 34 autour du premier axe de levier X1, d'obtenir un coulissement et un pivotement du premier crochet 36 permettant à la fois un maintien efficace du couvercle 20 en configuration verrouillée de l'appareil 10 et un éloignement suffisant entre le premier crochet et le couvercle en configuration déverrouillée de l'appareil, permettant un retrait simple du couvercle.

En outre, une distance D3, mesurée entre le premier axe de levier X1 et le premier axe de pivotement X3 selon l'axe principal Z1, est comprise entre 38,5 mm et 66,7 mm, de préférence encore comprise entre 45 mm et 59 mm, par exemple égale à 52,5 mm.

De plus, une distance D4, mesurée entre le premier axe de pivotement X3 et l'axe principal Z1, mesurée perpendiculairement à l'axe principal Z1, est comprise entre 80 mm et 130 mm, de préférence encore comprise entre 95 mm et 117 mm, par exemple égale à 106,5 mm.

De préférence, lorsque le premier levier 34 est dans son orientation de verrouillage, un angle θ2 formé entre l'extrémité basse 36A du premier crochet 36 et le premier levier 34, plus précisément entre l'extrémité basse 36A du premier crochet 36 et un axe reliant le premier axe de levier X1 au deuxième axe de levier X2, est compris entre 75° et 115°, de préférence entre 85° et 95°, par exemple égale à 90°.

De préférence, une longueur L3 du premier crochet 36, mesurée entre son extrémité basse 36A et son extrémité haute 36B dans un plan perpendiculaire au premier axe de pivotement X3, plus précisément mesurée parallèlement à la portion centrale 36C du premier crochet 36, est comprise entre 150 mm et 215 mm, de préférence entre 175 mm et 190 mm, par exemple égale à 182,8 mm.

De préférence, lorsque le premier levier 34 est dans son orientation de verrouillage et lorsque le premier crochet 36 est dans son orientation de verrouillage et dans sa position de verrouillage, une longueur interne L2 du premier crochet 36, mesurée entre son extrémité basse 36A et le premier axe de pivotement X3 dans un plan perpendiculaire au premier axe de pivotement X3, plus précisément mesurée parallèlement à la portion centrale 36C du premier crochet 36, est comprise entre 50 mm et 65 mm, de préférence entre 55 mm et 60 mm, par exemple égale à 56,7 mm.

De préférence, lorsque le premier levier 34 est dans son orientation de verrouillage et lorsque le premier crochet 36 est dans son orientation de verrouillage et dans sa position de verrouillage, un angle θ3 entre la portion centrale 36C du premier crochet 36 et l'axe principal Z1, mesuré dans un plan perpendiculaire au premier axe de pivotement X3, est inférieur à 13°, de préférence encore compris entre 5° et 13°, de préférence encore entre 7° et 11°, par exemple égal à 9°.

De préférence, lorsque le premier levier 34 est dans son orientation de déverrouillage et lorsque le premier crochet 36 est dans son orientation de déverrouillage et dans sa position de déverrouillage, une longueur interne L4 du premier crochet 36, mesurée entre son extrémité basse 36A et le premier axe de pivotement X3 dans un plan perpendiculaire au premier axe de pivotement X3, plus précisément mesurée parallèlement à la portion centrale 36C du premier crochet 36, est comprise entre 34 mm et 47 mm, de préférence entre 38 mm et 43 mm, par exemple égale à 40,5 mm.

Ainsi, un débattement linéaire du premier crochet 36 le long de sa partie centrale 36C, entre sa position de verrouillage et sa position de déverrouillage, est supérieur ou égal à 10 mm, de préférence supérieur ou égal à 15 mm, dans l'exemple égal à 16,2 mm. Autrement dit, le premier crochet 36 coulisse dans la première ouverture 12A sur une longueur de préférence supérieure ou égal à 10 mm, de préférence encore supérieure ou égale à 15 mm, dans l'exemple égale à 16,2 mm.

De préférence, lorsque le premier levier 34 est dans son orientation de déverrouillage et lorsque le premier crochet 36 est dans son orientation de déverrouillage et dans sa position de déverrouillage, un angle θ4 entre la portion centrale 36C du premier crochet 36 et l'axe principal Z1, mesuré dans un plan perpendiculaire au premier axe de pivotement X3, est supérieur ou égal à 5°, de préférence encore compris entre 5° et 25°, de préférence encore supérieur ou égal à 10°, de préférence encore entre 10° et 23°, par exemple égal à 19°.

Ainsi, un débattement angulaire du premier crochet 36 autour du premier axe de pivotement X3, entre son orientation de verrouillage et son orientation de déverrouillage, c'est-à-dire une différence entre l'orientation de verrouillage et l'orientation de déverrouillage du premier crochet, est supérieur ou égal à 5°, de préférence supérieur ou égal à 10°, dans l'exemple égal à 10°.

Grâce au débattement angulaire du premier crochet 36 entre son orientation de verrouillage et son orientation de déverrouillage, et dans une moindre mesure grâce au débattement linéaire du premier crochet entre sa position de verrouillage et sa position de déverrouillage, le premier crochet 36 est suffisamment éloigné du couvercle amovible 20 pour permettre à un utilisateur de facilement retirer le couvercle du reste de l'appareil 10 lorsque l'appareil est en configuration déverrouillée.

En particulier, une distance D5 mesurée entre l'extrémité haute 36B du premier crochet 36 dans son orientation de déverrouillage et dans sa position de déverrouillage et l'extrémité haute 36B du premier crochet 36 dans son orientation de verrouillage et dans sa position de verrouillage, mesurée perpendiculairement à l'axe principal Z1, est avantageusement comprise entre 10 mm et 40 mm, de préférence entre 20 mm et 30 mm, dans l'exemple égale à 26,4 mm. Ainsi, l'extrémité haute 36B du premier crochet 36 est suffisamment éloignée du reste de l'appareil 10, perpendiculairement à l'axe principal Z1, pour ne pas gêner le retrait du couvercle 20 du reste de l'appareil, dans un mouvement de translation selon l'axe principal Z1.

Les dimensions spécifiques précisées ci-dessus permettent d'obtenir un mouvement du premier crochet 36 performant pour maintenir le couvercle 20 en configuration de verrouillage de l'appareil 10 et pour ne pas gêner le retrait du couvercle en configuration déverrouillée de l'appareil 10.

En variante non-représentée de l'invention, les extrémités hautes 36B, 40B des premier et deuxième crochets 36, 40 coopèrent avec le couvercle 20 par l'intermédiaire de moyens différents que les premier et deuxième ergots 20A, 20B. Par exemple, le couvercle 20 présente deux creux, ou encoches, dans lesquels des ergots des extrémités hautes 36B, 40B sont reçus lorsque l'appareil est en configuration verrouillée. L'invention n'est pas limitée à ces exemples.

En variante non-représentée de l'invention, le couvercle 20 ne comprend pas de deuxième ergot, le système de verrouillage 32 ne comprend pas de deuxième levier ni de deuxième crochet et le dispositif d'actionnement 42 ne comporte pas la deuxième bielle. Dans une telle variante, le couvercle 20 est maintenu verrouillé uniquement par le premier crochet 36, ou bien est maintenu verrouillé par un autre dispositif de verrouillage, tel que par exemple un crochet maintenant le couvercle 20 fixe par rapport à la cuve à jus 14.

En variante non-représentée de l'invention, la tringle 44 s'étend selon un axe de tringle parallèle au premier axe de levier X1. Dans une telle variante, le deuxième axe de bielle X7 et le troisième axe de bielle Y3 sont confondus. Une telle variante est particulièrement avantageuse pour simplifier la conception de l'appareil 10 lorsque ce dernier ne comporte qu'un seul levier et qu'un seul crochet.

En variante non-représentée de l'invention, le système de verrouillage comprend un dispositif d'actionnement différent pour opérer les premier et deuxième leviers 34, 38. Par exemple, les premier et deuxième leviers 34, 38 sont actionnés directement par une poignée qui n'opère pas le système de freinage 30. Dans une telle variante, le système de freinage 30 peut être opéré distinctement du système de verrouillage 32.

En variante non-représentée de l'invention, l'appareil de préparation culinaire 10 est un appareil d'un autre type qu'une centrifugeuse, tel que, par exemple, un presse-agrumes, un mixeur, un hachoir, un broyeur à glaçons, une râpe à fromage, un coupe-légumes ou un robot multifonction.

En variante non-représentée de l'invention, l'outil 18 n'est pas un outil rotatif, mais, par exemple, un outil mobile en translation par rapport au socle 12, ou bien mobile par rapport au socle dans un mouvement combinant une ou plusieurs translations et/ou une ou plusieurs rotations par rapport au socle. Par exemple, l'outil est mobile en translation selon l'axe principal Z1, comme un pressoir, tel qu'un presse-agrumes. Dans une telle variante, le moteur électrique 24 actionne l'outil 18 par l'intermédiaire d'une transmission adaptée pour transformer le mouvement de rotation du moteur électrique 24 en un mouvement adapté de l'outil 18.

En variante non-représentée de l'invention, le moteur électrique 24 ne s'étend pas selon un axe vertical. Autrement dit, l'axe principal Z1, qui correspond à l'axe de rotation du moteur électrique 24, n'est pas nécessairement vertical, cette orientation étant toutefois privilégiée lorsque l'outil 18 est un outil rotatif mobile en rotation autour de l'axe vertical pour simplifier la conception de l'appareil 10. On remarque que, dans la description des modes de réalisation des figures 1 à 11, il est fait référence indistinctement à l'axe principal Z1 correspondant à l'axe de rotation du moteur électrique 24 et à un axe de hauteur, car l'axe principal Z1 est vertical, c'est-à-dire qu'il correspond à un axe de hauteur, dans ces modes de réalisation. On comprend ainsi que, dans des variantes où l'axe principal Z1 n'est pas vertical, certaines caractéristiques décrites ci-avant en relation avec l'axe principal Z1 s'entendent alors en relation avec un axe de hauteur, en l'occurrence un axe vertical. Par exemple, pour le fonctionnement du dispositif d'actionnement 42, l'orthogonalité de l'axe de tringle Y1, du premier axe de bielle Y2 et du troisième axe de bielle Y3 avec un axe de hauteur est avantageuse, mais l'orthogonalité de ces axes avec l'axe principal Z1 lorsque l'axe principal Z1 n'est pas un axe de hauteur ne procure pas d'avantages particuliers. À l'inverse, il est avantageux que l'organe de freinage 30B soit mobile en translation par rapport au socle 12 selon l'axe principal Z1 correspondant à l'axe de rotation du moteur électrique 24, mais le fait que l'organe de freinage 30B soit mobile en translation par rapport à un axe de hauteur n'apporte pas d'avantage particulier. Il est toutefois particulièrement avantageux que l'axe de rotation du moteur électrique 24 soit un axe de hauteur, notamment vertical, car cela facilite la conception de l'appareil 10, notamment en simplifiant et en optimisant les interactions entre le système de freinage 30 et le dispositif d'actionnement 42.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Appareil de préparation culinaire (10), notamment centrifugeuse, comprenant au moins :
- un socle (12),
- un outil (18), monté sur le socle (12),
- un couvercle amovible (20), destiné à être monté sur le reste de l'appareil (10) pour recouvrir l'outil (18),
- un moteur électrique (24), monté sur le socle (12), mobile en rotation autour d'un axe principal (Z1) et configuré pour actionner l'outil (18), et
- un système de verrouillage (32) du couvercle amovible (20) sur le socle (12),
**caractérisé en ce que** le système de verrouillage (32) comprend :
- un dispositif d'actionnement (42),
- un premier levier (34), disposé dans le socle (12), mobile en rotation par rapport au socle (12) autour d'un premier axe de levier (X1), le premier levier (34) étant configuré pour être entraîné en rotation autour du premier axe de levier (X1) par le dispositif d'actionnement (42),
- un premier crochet (36), configuré pour être mis en mouvement par le premier levier (34), et comportant :
∘ une extrémité basse (36A), attachée au premier levier (34) de sorte à être mobile en rotation par rapport au premier levier (34) autour d'un deuxième axe de levier (X2) parallèle au premier axe de levier (X1),
∘ une extrémité haute (36B), et
∘ une portion centrale (36C) allongée, reliant l'extrémité basse (36A) à l'extrémité haute (36B),
**en ce que** la portion centrale (36C) du premier crochet (36) s'étend au travers d'une première ouverture (12A) du socle (12), en étant guidée par la première ouverture (12A) du socle (12), de sorte que le premier crochet (36) est apte à :
- coulisser, par rapport au socle (12), le long de sa portion centrale (36C), entre une position de verrouillage et une position de déverrouillage, et conjointement
- pivoter, par rapport au socle (12), autour d'un premier axe de pivotement (X3) parallèle au premier axe de levier (X1) et passant par la première ouverture (12A) du socle, entre une orientation de verrouillage et une orientation de déverrouillage,
et **en ce que** l'appareil (10) est opérable, par le dispositif d'actionnement (42) entraînant en rotation le premier levier (34) autour du premier axe de levier (X1), entre :
- une configuration verrouillée, dans laquelle le premier crochet (36) est dans sa position de verrouillage et dans son orientation de verrouillage et dans laquelle l'extrémité haute (36B) du premier crochet (36) est en contact avec le couvercle amovible (20), empêchant un retrait du couvercle amovible (20), et
- une configuration déverrouillée, dans laquelle le premier crochet (36) est dans sa position de déverrouillage et dans son orientation de déverrouillage et dans laquelle l'extrémité haute (36B) du premier crochet (36) est écartée du couvercle amovible (20), autorisant un retrait du couvercle amovible (20).

2. Appareil (10) selon la revendication 1, dans lequel le dispositif d'actionnement (42) comprend :
- une tringle (44), mobile en rotation par rapport au socle (12) autour d'un axe de tringle (Y1), entre une orientation de verrouillage et une orientation de déverrouillage, et
- une première bielle (48), comportant :
∘ une première extrémité (48A), attachée à la tringle (44) de sorte à être mobile en rotation par rapport à la tringle (44) autour d'un premier axe de bielle (Y2) parallèle à l'axe de tringle (Y1), et
∘ une deuxième extrémité (48B), attachée au premier levier (34) de sorte à être mobile en rotation par rapport au premier levier (34) autour d'un deuxième axe de bielle (X7) parallèle au premier axe de levier (X1) et d'un troisième axe de bielle (Y3) parallèle au premier axe de bielle (Y2),
et dans lequel le dispositif d'actionnement (42) est configuré pour qu'une rotation de la tringle (44) autour de l'axe de tringle (Y1) entre ses orientations de verrouillage et de déverrouillage entraîne en rotation le premier levier (34) autour du premier axe de levier (X1) par l'intermédiaire de la première bielle (48) et opère ainsi l'appareil (10) entre ses configurations verrouillée et déverrouillée respectivement, l'appareil (10) étant en configuration verrouillée lorsque la tringle (44) est en orientation de verrouillage et l'appareil (10) étant en configuration déverrouillée lorsque la tringle (44) est en orientation de déverrouillage.

3. Appareil (10) selon la revendication 2, dans lequel le dispositif d'actionnement (42) comprend une poignée (46), attachée à la tringle (44) et mobile en rotation par rapport au socle (12) autour de l'axe de tringle (Y1), la poignée (46) étant configurée pour entraîner en rotation la tringle (44) autour de l'axe de tringle (Y1) entre ses orientations de verrouillage et de déverrouillage.

4. Appareil (10) selon l'une des revendications 2-3, dans lequel l'axe de tringle (Y1), le premier axe de bielle (Y2) et le troisième axe de bielle (Y3) sont orthogonaux à un axe de hauteur (Z1), dans lequel :
- en configuration verrouillée de l'appareil (10), la tringle (44) est située entre la première extrémité (48A) de la première bielle (48) et la deuxième extrémité (48B) de la première bielle (48), selon l'axe de hauteur (Z1), et
- en configuration déverrouillée de l'appareil (10), la première extrémité (48A) de la première bielle (48) est située entre la tringle (44) et la deuxième extrémité (48B) de la première bielle (48), selon l'axe de hauteur (Z1),
la première extrémité (48A) de la première bielle (48) étant déplacée vers le bas et la tringle (44) étant déplacée vers le haut, selon l'axe de hauteur (Z1), lorsque l'appareil (10) est opéré depuis sa configuration déverrouillée vers sa configuration verrouillée, et
la première extrémité (48A) de la première bielle (48) étant déplacée vers le haut et la tringle (44) étant déplacée vers le bas, selon l'axe de hauteur (Z1), lorsque l'appareil (10) est opéré depuis sa configuration verrouillée vers sa configuration déverrouillée.

5. Appareil (10) selon la revendication 4, dans lequel, en configuration verrouillée de l'appareil (10), le premier axe de bielle (Y2) est situé d'un premier côté d'un plan (P) passant par l'axe de tringle (Y1) et par le troisième axe de bielle (Y3), dans lequel, en configuration déverrouillée de l'appareil (10), le premier axe de bielle (Y2) est situé d'un deuxième côté du plan (P) passant par l'axe de tringle (Y1) et par le troisième axe de bielle (Y3), le deuxième côté étant opposé au premier côté, et dans lequel l'appareil (10) passe par une configuration d'alignement lorsque l'appareil (10) est opéré entre sa configuration déverrouillée et sa configuration verrouillée, dans laquelle le premier axe de bielle (Y2) passe par le plan (P) passant par l'axe de tringle (Y1) et par le troisième axe de bielle (Y3).

6. Appareil (10) selon l'une des revendications 2-5, dans lequel la tringle (44) est mobile en translation par rapport au socle (12) le long de l'axe principal (Z1), entre une position de libération et une position de freinage,
dans lequel la position de libération de la tringle (44) est atteinte lorsque le couvercle amovible (20) est monté sur le reste de l'appareil (10) et lorsque la tringle (44) est dans son orientation de verrouillage,
dans lequel l'appareil (10) comprend, en outre, un système de freinage (30), apte à freiner une rotation du moteur électrique (24) autour de l'axe principal (Z1), le système de freinage (30) comprenant :
- un dispositif de freinage (30A), solidaire en rotation avec le moteur électrique (24), et
- un organe de freinage (30B), attaché à la tringle (44) de sorte à être mobile en rotation par rapport à la tringle (44) autour de l'axe de tringle (Y1) et fixe en translation par rapport à la tringle (44) selon l'axe principal (Z1),
dans lequel une translation de la tringle (44) entre sa position de libération et sa position de freinage opère l'organe de freinage (30B) entre :
- une position de libération, atteinte lorsque la tringle (44) est en position de libération et dans laquelle l'organe de freinage (30B) ne coopère pas avec le dispositif de freinage (30A) de sorte que le système de freinage (30) ne s'oppose pas à une rotation du moteur électrique (24) autour de l'axe principal (Z1), et
- une position de freinage, atteinte lorsque la tringle (44) est en position de freinage et dans laquelle l'organe de freinage (30B) coopère avec le dispositif de freinage (30A) de sorte que le système de freinage (30) s'oppose à une rotation du moteur électrique (24) autour de l'axe principal (Z1).

7. Appareil (10) selon la revendication 6, dans lequel le système de freinage (30) comporte, en outre, un organe de rappel (30D), exerçant un effort sur l'organe de freinage (30B) et sur la tringle (44) selon l'axe principal (Z1) tendant à ramener la tringle (44) dans sa position de freinage,
dans lequel, lorsque le couvercle amovible (20) est monté sur le reste de l'appareil (10), une rotation de la tringle (44) depuis son orientation de déverrouillage vers son orientation de verrouillage entraîne une translation de la tringle (44) depuis sa position de freinage vers sa position de libération, à l'encontre de l'effort exercé par l'organe de rappel (30D) sur l'organe de freinage (30B) et sur la tringle (44),
et dans lequel, lorsque le couvercle amovible (20) n'est pas monté sur le reste de l'appareil (10), une rotation de la tringle (44) depuis son orientation de déverrouillage vers son orientation de verrouillage n'entraîne pas de translation de la tringle (44) depuis sa position de freinage vers sa position de libération et entraîne un coulissement du premier crochet (36) au-delà de sa position de verrouillage, sous l'effet de l'effort exercé par l'organe de rappel (30D) sur l'organe de freinage (30B) et sur la tringle (44).

8. Appareil (10) selon l'une des revendications 6-7, dans lequel le dispositif de freinage (30A) est un disque de freinage, solidaire en rotation avec le moteur électrique (24), l'organe de freinage (30B) est une tôle de freinage, s'étendant parallèlement au disque de freinage (30A), et, en position de freinage, la tôle de freinage (30B) est en appui contre le disque de freinage (30A) pour s'opposer à une rotation du moteur électrique (24) autour de l'axe principal (Z1).

9. Appareil (10) selon l'une des revendications 6-8, dans lequel le socle (12) comporte un trou oblong (12C), s'étendant selon l'axe principal (Z1), et la tringle (44) s'étend au travers du trou oblong (12C) du socle (12) de sorte que le socle (12) n'empêche pas la translation de la tringle (44) le long de l'axe principal (Z1).

10. Appareil (10) selon l'une des revendications 6-9, comportant, en outre, un dispositif de guidage (60), qui guide en translation l'organe de freinage (30B) et la tringle (44) par rapport au socle (12) selon l'axe principal (Z1).

11. Appareil (10) selon l'une des revendication 1-10, dans lequel un rapport entre une première distance (D2), mesurée entre le premier axe de levier (X1) et le premier axe de pivotement (X3), et une longueur (L1) du premier levier (34), mesurée entre le premier axe de levier (X1) et le deuxième axe de levier (X2), est compris entre 1,5 et 4,5, de préférence égal à 2,6.

12. Appareil (10) selon l'une des revendications 1-11, dans lequel un débattement angulaire du premier crochet (36) autour du premier axe de pivotement (X3), entre son orientation de verrouillage et son orientation de déverrouillage, est supérieur ou égal à 5°, de préférence supérieur ou égal à 10°.

13. Appareil (10) selon l'une des revendication 1-12, dans lequel un débattement linéaire du premier crochet (36) le long de sa partie centrale, entre sa position de verrouillage et sa position de déverrouillage, est supérieur ou égal à 10 mm, de préférence supérieur ou égal à 15 mm.

14. Appareil (10) selon l'une des revendication 1-13, comprenant, en outre, un dispositif de coupure (28), opérable entre :
- une configuration d'alimentation, dans laquelle le moteur électrique (24) est électriquement alimenté de sorte à être apte à actionner l'outil (18), et
- une configuration de coupure, dans laquelle le moteur électrique (24) n'est pas électriquement alimenté de sorte à ne pas être apte à actionner l'outil (18),
dans lequel le dispositif de coupure (28) est en configuration d'alimentation lorsque l'appareil (10) est en configuration verrouillée,
dans lequel le dispositif de coupure (28) est en configuration de coupure lorsque l'appareil (10) est en configuration déverrouillée,
et dans lequel l'appareil (10) est également opérable, par le dispositif d'actionnement (42) entraînant en rotation le premier levier (34) autour du premier axe de levier (X1), en une configuration intermédiaire, atteinte entre la configuration verrouillée et la configuration déverrouillée, dans laquelle l'extrémité haute du premier crochet (36) est en contact avec le couvercle amovible (20), empêchant un retrait du couvercle amovible (20) et dans laquelle le dispositif de coupure (28) est en configuration de coupure.

15. Appareil (10) selon l'une des revendication 1-14, dans lequel le système de verrouillage (32) comprend, en outre :
- un deuxième levier (38), disposé dans le socle (12), mobile en rotation par rapport au socle (12) autour d'un troisième axe de levier (X4), le deuxième levier (38) étant configuré pour être entraînée en rotation autour du troisième axe de levier (X4) par le dispositif d'actionnement (42),
- un deuxième crochet (40), configuré pour être mis en mouvement par le deuxième levier (38), et comportant :
∘ une extrémité basse (40A), attachée au deuxième levier (38) et mobile en rotation par rapport au deuxième levier (38) autour d'un quatrième axe de levier (X5) parallèle au troisième axe de levier (X4),
∘ une extrémité haute (40B), et
∘ une portion centrale (40C) allongée, reliant l'extrémité basse (40A) à l'extrémité haute (40B),
dans lequel la portion centrale (40C) du deuxième crochet (40) s'étend au travers d'une deuxième ouverture (12B) du socle (12) en étant guidée par la deuxième ouverture (12B) du socle (12), de sorte que le deuxième crochet (40) est apte à :
- coulisser, par rapport au socle (12), le long de sa portion centrale (40C), entre une position de verrouillage et une position de déverrouillage du deuxième crochet (40) par rapport au socle (12), et conjointement
- pivoter, par rapport au socle (12), autour d'un deuxième axe de pivotement (X6) parallèle au quatrième axe de levier (X5) et passant par la deuxième ouverture (12B) du socle (12), entre une orientation de verrouillage et une orientation de déverrouillage,
dans lequel l'appareil (10) est opéré entre sa configuration verrouillée et sa configuration déverrouillée par le dispositif d'actionnement (42) entraînant en rotation, outre le premier levier (34) autour du premier axe de levier (X1), le deuxième levier (38) autour du troisième axe de levier (X4),
dans lequel, en configuration verrouillée de l'appareil (10), le deuxième crochet (40) est dans sa position de verrouillage et dans son orientation de verrouillage et l'extrémité haute du deuxième crochet (40) est en contact avec le couvercle amovible (20), empêchant un retrait du couvercle amovible (20),
et dans lequel, en configuration déverrouillée de l'appareil (10), le deuxième crochet (40) est dans sa position de déverrouillage et dans son orientation de déverrouillage et l'extrémité haute du deuxième crochet (40) est écartée du couvercle amovible (20), autorisant un retrait du couvercle amovible (20).
